# EUROPEAN PATENT SPECIFICATION

(11) **EP 4 378 066 B1**
(45) Date of publication and mention of the grant of the patent: **25.11.2026**
(21) Application number: 21769967.7
(22) Date of filing: 31.08.2021
(51) Int. Cl.: H02M 1/42, H02M 7/483, H02M 7/487

(54) **CONTROLLER AND METHOD FOR CONTROLLING A RECTIFIER**
STEUERUNG UND VERFAHREN ZUM STEUERN EINES GLEICHRICHTERS
CONTRÔLEUR ET PROCEDE DE COMMANDE D'UN REDRESSEUR

(43) Date of publication of application: 05.06.2024
(73) Proprietor: Huawei Technologies Co., Ltd., Shenzhen, Guangdong 518129 (CN)
(72) Inventor: LOPEZ SANTOS, Diego, 80992 Munich (DE); FREIJEDO FERNÁNDEZ, Francisco, Daniel, 80992 Munich (DE)
(74) Representative: Roth, Sebastian
(86) International application number: PCT/EP2021/073925
(87) International publication number: WO 2023/030605

(56) References cited:
- EP-A1- 3 176 935
- EP-A2- 2 461 469
- CN-B- 111 130 366
- CN-U- 205 864 282
- JP-A- H09 189 729
- US-A1- 2019 020 271
- YANG HAN ET AL: "Modeling and controller synthesis for the cascaded H-bridge multilevel active power filter with ADALINE-based identifiers", ELECTRICAL ENGINEERING ; ARCHIV FÜR ELEKTROTECHNIK, SPRINGER, BERLIN, DE, vol. 93, no. 2, 8 December 2010 (2010-12-08), pages 63 - 81, XP019908294, ISSN: 1432-0487, DOI: 10.1007/S00202-010-0192-0
- HOSSEIN IMAN-EINI ET AL: "A Modular Strategy for Control and Voltage Balancing of Cascaded H-Bridge Rectifiers", IEEE TRANSACTIONS ON POWER ELECTRONICS, INSTITUTE OF ELECTRICAL AND ELECTRONICS ENGINEERS, USA, vol. 23, no. 5, 1 September 2008 (2008-09-01), pages 2428 - 2442, XP011239126, ISSN: 0885-8993, DOI: 10.1109/TPEL.2008.2002055
- TERCIYANLI A ET AL: "Power quality solutions for Light Rail public transportation systems fed by medium voltage underground cables", ENERGY CONVERSION CONGRESS AND EXPOSITION (ECCE), 2010 IEEE, IEEE, PISCATAWAY, NJ, USA, 12 September 2010 (2010-09-12), pages 1191 - 1203, XP031787049, ISBN: 978-1-4244-5286-6
- YADAV VINOD KUMAR ET AL: "An Integrated Single Switch AC-DC System for LED Driven by an Unconventional Rectifier", 2020 IEEE INTERNATIONAL CONFERENCE ON POWER ELECTRONICS, DRIVES AND ENERGY SYSTEMS (PEDES), IEEE, 16 December 2020 (2020-12-16), pages 1 - 6, XP033890493, DOI: 10.1109/PEDES49360.2020.9379809

## Description

### TECHNICAL FIELD

The disclosure relates to a controller for controlling a rectifier, a rectifier arrangement comprising such a controller and a rectifier as well as a method for controlling a rectifier.

### BACKGROUND

The disclosure is in the field of rectifiers for rectifying an AC voltage of an AC grid. In particular, the disclosure is directed to rectifiers that comprise at least one switch, wherein the switch is configured to short-circuit an input of the rectifier when the switch is in the conducting state (on-state).

Examples of controlled rectifiers with power factor correction capabilities are disclosed in CN111130366, US2019020271, EP2461469 and EP3176935.

### SUMMARY

The invention is defined by the features of device claim 1 and method claim 9. The dependent claims recite advantageous embodiments of the invention.

Embodiments of the invention are based on the following considerations made by the inventors: Solid state transformers (SSTs) are a power electronic based alternative to line-frequency transformers (LFTs). LFTs are classic elements of transmission and distribution to interface different voltage levels in AC grids. LFTs are cost effective, highly efficient with high loads and reliable. However, they suffer from several limitations, including voltage drop under load, sensitivity to harmonics, load imbalances and DC offsets, no overload protection, and low efficiency when operating with light loads. On the other hand, SSTs are based on power electronics switches, sensors and intelligent controls, which enable advanced functionalities, such as, power flow control; reactive power, harmonics, and imbalances compensation; smart protection and ride-through capabilities. Furthermore, high switching frequency operation enables a significant reduction of the volume and weight. Some of these features combined give SST an edge upon classical LFTs.

SSTs may be used as a power electronics interface for a high voltage AC grid as well as a medium voltage AC grid. Currently, the prevalent solution for solid state transformer (SST) technology, e.g. in data centers, is considering multi-module multi-level topologies when interfacing medium voltage (MV) AC grids. Input series output parallel (ISOP) topologies are a prevalent solution for a two stage power conversion between a MV AC grid and a low voltage (LV) DC grid. In applications, such as a data center application, where the active power flow is from a MV AC grid to a DC side (where the load is connected), the AC-to-DC conversion may be based on pulse-width modulation (PWM) unity power factor rectifier (UPFR) topologies. PWM UPFR topologies (in short UPFR topologies) have a very good power density, achieve very good power quality and are cost-effective. The terms "PWM UPFR" and "UPFR" may be sued as synonyms.

Classical control methods for ISOP systems synchronize with the MV AC grid by means of voltage sensors connected at a point of connection at which the AC-to-DC converter, in particular the rectifier, is connected via a filter and one or more other optional means to the MV AC grid. The point of connection may be referred as converter point of connection (PCC).

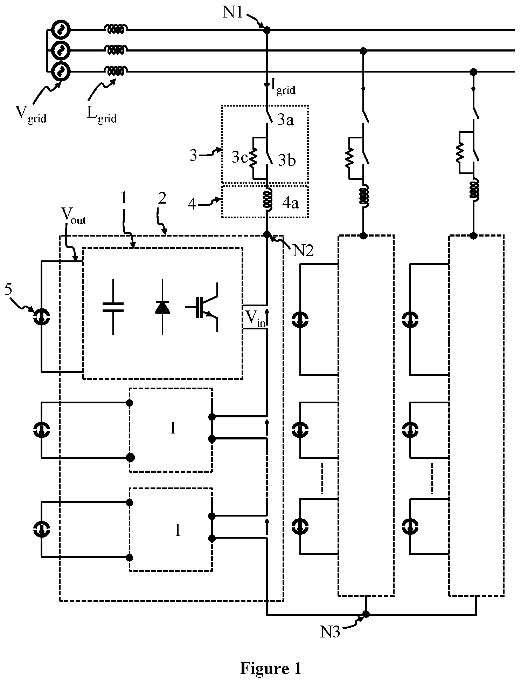

Modular multilevel cascaded converters are a prevalent solution to achieve the SST implementation. **Figure** 1 shows an example of a three-phase cascaded H-bridge (CHB) topology of a SST connected to an AC grid. As shown in Figure 1, the SST comprise three circuit branches 2 respectively phases 2 that are each connected via a SST input filter 4 and an optional pre-charge circuit 3 at a converter point of connection (PCC) N1 to the AC grid providing an AC voltage V_{grid} (may be referred to as grid AC voltage). An example of the input filter 4 may be an inductor 4a, as shown in Figure 1. The inductor 4a filters voltage high frequency harmonics. Thus, despite the voltage at the terminals of the respective circuit branch 2 (power converter terminals) have a high frequency component (may be typically PWM waveforms), the currents that are drawn respectively flow through the input filter 4, in particular the inductor 4a, are more sinusoidal (respectively look more sinusoidal). That is, the input filter 4 may filter the current. More advanced implementation forms of the input filter may comprise LC or LCL (and even higher order) topologies. The inductor L_{grid} represents the grid impedance of the AC grid, which may be dominated by an inductive behavior. The following description of one circuit branch 2 is valid for each circuit branch 2 respectively phase of the SST. As shown in Figure 1, the circuit branch 2 comprise one or more rectifiers 1. Thus, the circuit branch 2 corresponds to a rectifier arrangement. Each rectifier 1 may be referred to a cell of the circuit branch 2. Each rectifier 1 may be a unity power factor rectifier (UPFR) respectively UPFR cell. The rectifier 1 receives on the AC side an AC voltage Vᵢₙ, which may be referred to as AC input voltage respectively cell input voltage. The DC side of the rectifier 1 (i.e. the output of the rectifier 1) is connected to a load, represented by a current source 5. At the DC side of the rectifier 1, the rectifier 1 provides a DC output voltage Vₒᵤₜ, which may be referred to as DC-link voltage. Each rectifier 1 (rectifier cell) of a respective circuit branch 2 (phase) of the SST may be of the same form. The voltage between the node N2 (input node) and N3 (neutral node) is an input voltage (phase input voltage) of the circuit branch 2 of the SST. The phase input voltage is the input voltage Vᵢₙ of the rectifier 1 in case of only one rectifier 1 and is composed of the addition of the input voltage Vᵢₙ of the rectifiers 1 in case of two or more rectifiers 1.

The SST filter 4 is represented by an inductor 4a, because of its dominant inductive nature. Alternatively, it may be represented by a series connection of an inductor and a resistor. More advanced input filter topologies, such as LC or LCL filters, may be employed, without changing the current source nature of the converter. At the node N1 (the converter point of connection (PCC)), the voltage is equal to the difference between the AC voltage V_{grid} of the AC grid and the input voltage (phase input voltage) of the SST. The pre-charge circuit 3 may comprise two switches 3a, 3b and a resistor 3c and is of relevance when starting the converter. The current I_{grid} is the AC current provided by the AC current and correspond to the input current through the circuit branch respectively phase 2 of the SST.

The use of multiple rectifiers 1 (e.g. rectifier modules) for each circuit branch 2 has the following advantages. For implementing the rectifier 1 power electronics switches suited for a low voltage class may be used, because the input phase voltage is divided up among the rectifiers 1 of the respective phase of the SST. That is, it is possible to use low voltage power electronics technologies in high/medium voltage applications. Further, the power quality of the AC input voltage waveform increases with the number of rectifiers (more voltage levels implies less harmonic distortion as the dominant switching frequencies are of a higher frequency, and therefore, are better filtered by the input filter 4). Thus, the filter effort of the input filter 4 is reduced as the harmonics are less and less significant.

The advantages of multilevel converters are at the cost of increasing the complexity; both in terms of topology and control. Focusing on control, the main challenge is to achieve a reliable and robust regulation of the DC-link voltages Vₒᵤₜ, despite there is a common and constrained path for branch currents.

The ISOP SST concept of Figure 1 is optimized for applications in which the power delivery is going in one direction. In such scenario, the rectifier cells 1 that build each circuit branch (leg) respectively phase of the SST can be based on a PWM unity power factor rectifier (UPFR), as outlined above.

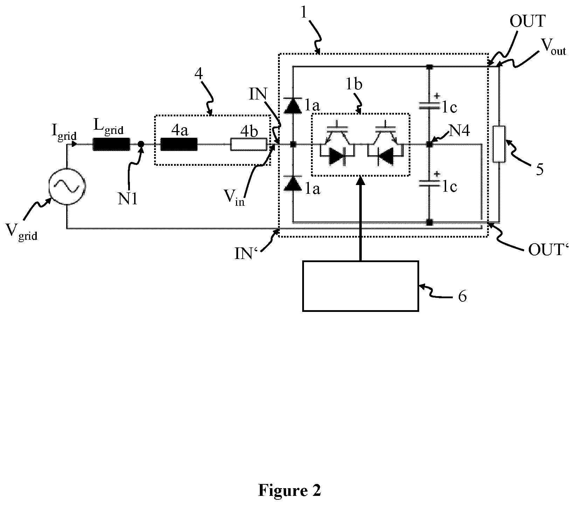

**Figure 2** shows an example of a PWM UPFR, i.e. a rectifier 1 based on a PWM UPFR topology. The rectifier 1 has an input that is configured to be electrically connected via an input filter 4 to an AC grid providing an AC voltage V_{grid}, the AC grid having an impedance L_{grid}. The input filter 4 may be represented by an inductor 4a and a resistor 4b. The input of the rectifier 1 may comprise two input terminals IN and IN'. A load 5 may be connected to the output of the rectifier 1. That is, on the DC side of the rectifier 1 a load 5 may be connected. The output of the rectifier 1 may comprise two output terminals OUT and OUT'. The rectifier 1 may be configured to provide a DC voltage (DC output voltage) at its output. The DC voltage may be referred to as DC-link voltage.

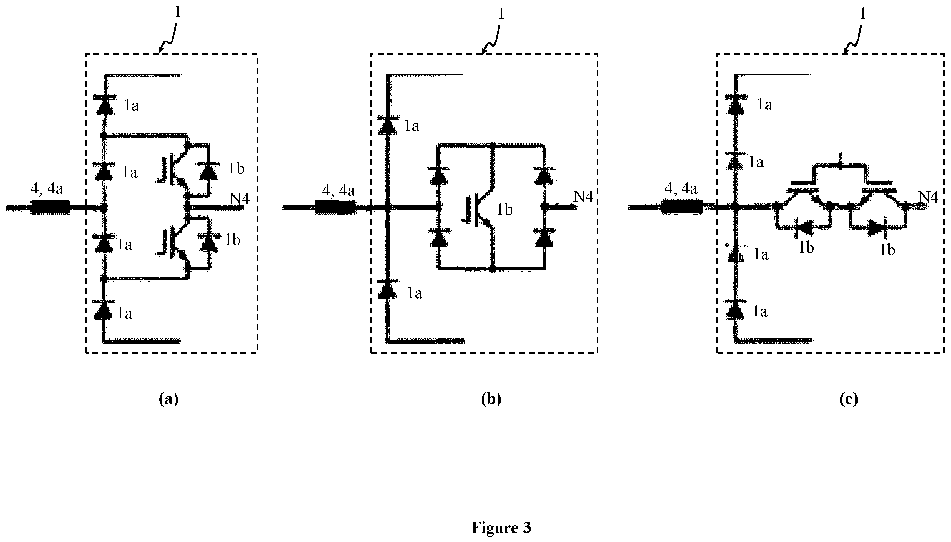

The rectifier 1 may comprise at least one switch 1b configured to short-circuit the input of the rectifier 1, in particular short-circuit the two input terminals IN and IN'. In particular, when the at least one switch 1b is in the conducting state (on-state) it short-circuits the input respectively the two input terminals IN, IN' of the rectifier 1. As shown in Figure 2 the at least one switch 1b may be at least one bi-directional switch. In particular, the at least one switch 1b may be implemented by two insulated gate bipolar transistors (IGBTs), wherein a diode is connected in anti-parallel to each IGBT. The at least one switch 1b is an active switch and may be controlled by a PWM signal. Further, the rectifier 1 comprises at least two diodes 1a for rectifying the AC voltage V_{grid} of the AC grid. The at least two diodes 1a and the at least one switch 1b are electrically connected such that the at least one switch 1b is configured to prevent conduction of the at least two diodes 1a by short-circuiting the input, in particular the two input terminals IN, IN'. Furthermore, the rectifier 1 may comprise at least two output capacitors 1c. The output capacitors 1c may be referred to as DC-link capacitors. As indicated in Figure 2, the at least one switch 1b is controllable by a PWM signal that may be provided by a controller 6 for controlling the rectifier 1. The rectifier 2 and the controller 6 may form a rectifier arrangement. The number of switches 1b, diodes 1a and capacitors 1c of the rectifier 1 as well as the implementation of the at least one switch 1b of the rectifier 1 of Figure 2 is only by way of example and does not limit the disclosure. Thus, the PWM UPFR 1 may be differently implemented. Examples of different implementation forms of a rectifier based on PWM UPFR topology are shown in **Figures 3(a), (b) and (c).**

Key features of PWM UPFR operation comprise the following. Power conversion is constrained to work with power factor equal to one: assuming the fundamental components (e.g. spectrum components of 50 Hz in case of a 50 Hz AC grid) of the AC current and the AC input voltage, these two waveforms are in-phase. Simple layout and high power density may be achieved because diodes are easier to implement in a real circuit than active switches (e.g., IGBT). Thus, the PWM UPFR is advantageous with respect to a full-bridge rectifier comprising four switches. Active switches have the disadvantage compared to diodes that they need a complex circuitry for being controlled (e.g. drivers). With the PWM UPFR topology a high frequency PWM operation is achievable. This allows reducing the size of magnetics and thus achieving a cost/size/losses optimization. Furthermore, this allows a high power quality. Namely, due to a high frequency operation, a low total harmonic distortion (THDi) in the AC current provided by the AC grid to the PWM UPFR is achievable. A vector control and PWM techniques, similar to the ones employed in four quadrants CHB, are suitable for closed-loop operation.

The above key features are especially suited when using the rectifier as part of SSTs in data centre applications.

Classical control methods for a SST, such as the SST of Figure 1, synchronize with the AC grid by means of AC voltage sensors connected at the point of connection N1. As shown in Figure 1, at the point of connection N1 the circuit branches (legs) 2 of the SST and, thus, the PWM UPFR 1 are connected via a filter 4 and one or more other optional means 3 to the AC grid providing the AC grid voltage V_{grid}. Drawbacks of this approach are: AC voltage sensors (such as medium AC voltage sensors) are very expensive. The acquisition system may be complex and bandwidth limited. They may have failures and reduce availability/reliability. Further, the nature of the UPFR topology demand its input voltage to be in-phase with the input current. However, in practice the synchronization with the voltage measured at the PPC (i.e. the PCC voltage) N1 introduces a phase-error due to a phase-offset between the two sides of the input filter 4 (an inductive filter is connected between the input of the rectifier and the point of connection).

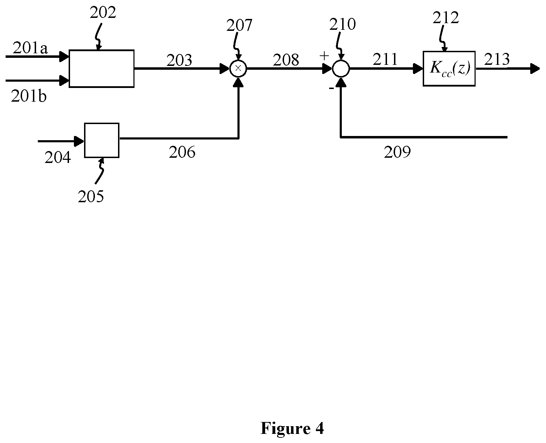

Thus, ISOP SST comprising rectifiers based on PWM UPFR topology have an important challenge related to the grid synchronization: the current total harmonic distortion (THDi) index is very sensitive to an accurate grid-voltage zero-crossing detection. Two phenomena are dominant in this loss of performance: Firstly, there is a systematic offset error in the synchronization. **Figure 4** shows a conventional current reference generation. This phase angle estimation may be negative impacted due to: presence of voltage harmonics, switching is reflected in the acquired signal due to weakness of the grid, uncompensated delays in the acquisition and control system, dead-time effects and poor phase locked loop (PLL) design/implementation/tuning. The term "phase lock loop" may be used as a synonym for the term "phase locked loop".

In particular, Figure 4 shows an example of a block diagram of a control of the switch of the rectifier of Figure 2 with a PWM signal. Thus, in the following description of Figure 4, reference is made to the rectifier of Figure 2, which is a PWM UPFR. In Figure 4, the block "202" represents an outer-loop control loop, to which a reference 201a and a variable 201b controlled in the outer-loop control loop 202 is provided. The reference may be (but not limited to) for example power, energy stored in the DC -link (i.e. energy on the DC side of the rectifier 1), DC-link voltage (i.e. voltage on the DC side of the rectifier 1), etc. The voltage 204 at the point of connection N1, at which the rectifier 1 is connected via the input filter 4 to the AC grid, is input into a phase locked loop (PLL). This voltage 204 is measured by an AC voltage sensor. Using this voltage as PLL input may lead to a synchronization error because, by the nature of UPFR operation, the rectifier 1 is to synchronize with its own input voltage Vᵢₙ. The PLL tracks the fundamental phase-angle of its input. It may be single-phase, three-phase or multiphase. The PLL output 206 is a sinusoidal waveform, in-phase with the PLL input fundamental component. The outer-loop control loop 202 provides an output 203, from which the main information is of DC nature. A multiplier 207 combines the DC-information from the output 203 of the outer-loop control loop 202 with the phase information from the PLL output 206 to provide a reference current 208 for an inner-loop control loop of the AC current I_{grid} input from the AC grid to the rectifier 1. The block 210 calculates an error between the reference current 208 and current feedback 209 of the AC current I_{grid}. This error is employed in the current loop filter of block 212 to compute a PWM reference 213 for the PWM signal used to control the at least one switch 1b of the rectifier 1.

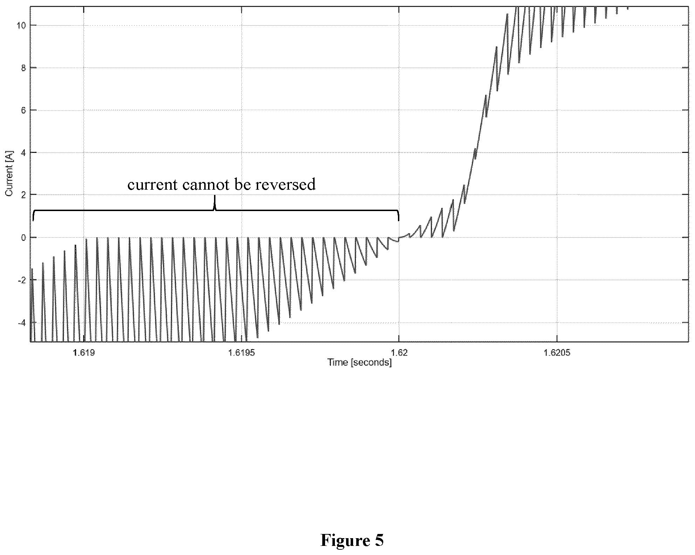

Secondly, in an UPFR topology the current cannot be reversed. That is, the input voltage Vᵢₙ and current I_{grid} work with the same sign. This is a constraint imposed by the physical system (i.e., strong physical constraint). In other words, the current may not reverse the voltage at any instant. **Figure** 5 details the zero-crossing distortion, where the current has a significant switching ripple, when the current aims to get reverse, which is not allowed by the UPFR topology. Since the zero-crossing has a strong effect in the current shape, it involves a strong non-linearity that creates distortion and instability. Zero-crossing distortion is a problem for power quality (a poor THDi is not acceptable in harmonics standards that a commercial equipment has to comply with) and efficiency (the extra losses during the zero-crossings are a great penalty for the overall efficiency). Thus, methods to reduce the zero-crossing distortion in PWM UPFR topologies are always of a great commercial interest.

In view of the above-mentioned problems and disadvantages, embodiments of the present disclosure aim to improve a control, using a PWM signal, of a rectifier. In particular, an objective is to improve a control, using a PWM signal, of a unity power factor rectifier (UPFR).

The objective is achieved by the embodiments of the invention as described in the enclosed independent claims. Advantageous implementations of the embodiments of the invention are further defined in the dependent claims.

A first aspect of the disclosure provides a controller for controlling a rectifier for rectifying an AC voltage of an AC grid. The rectifier comprises at least one switch controllable by the controller for short-circuiting an input of the rectifier. The controller is configured to control switching of the at least one switch using a pulse-width modulation (PWM) signal. Further, the controller is configured to compute, using an AC current of the AC grid and a DC voltage of an output of the rectifier, an AC voltage of the input of the rectifier. Furthermore, the controller is configured to provide, based on the computed AC voltage, a reference AC voltage for the PWM signal.

With other words, the first aspect proposes to compute the AC input voltage of the rectifier using the AC current of the AC grid and the DC output voltage of the rectifier and to provide, based on the computed AC input voltage, a PWM reference (in the form of a reference AC voltage) for the PWM signal. The PWM signal is used for controlling the switching of the at least one switch of the rectifier.

Since the controller of the first aspect uses the AC input voltage of the rectifier (which is computed) instead of the voltage at the point of connection, at which the rectifier may be connected via a filter to the AC grid, for providing the reference AC voltage for the PWM signal, the above described drawbacks of synchronization are overcome. In particular, the controller of the first aspect may use the AC input voltage of the rectifier (which is computed) for phase-angle synchronization purposes. As a result, no voltage sensors (e.g. MV AC voltage sensors) are needed for detecting the voltage at the point of connection, which reduces the costs for controlling the rectifier. Moreover, the computation of the AC input voltage is performed using the AC current of the AC grid and the DC output voltage of the rectifier, which are variables that may be easily obtained or already known by the controller.

In particular, the rectifier comprises at least two diodes for rectifying the AC voltage of the AC grid, and the at least one switch controllable by the controller. The at least two diodes and the at least one switch are electrically connected such that the at least one switch is configured to prevent conduction of the at least two diodes by short-circuiting the input of the rectifier.

The input of the rectifier may be connected via an input filter to the AC grid, such that the AC current of the AC grid is provided to the input of the rectifier via the filter. The AC current of the AC grid may be referred to as the AC input current of the rectifier.

In particular, the controller is configured to control switching of the at least one switch such that the AC current of the AC grid is synchronized with the reference AC voltage, in particular the computed AC voltage.

The controller may comprise or be implemented by a processor, a microprocessor, a microcontroller, a field programmable gate array (FPGA), an application specific integrated circuit (ASIC) or any combination thereof.

The rectifier may be a unity power factor rectifier (UPFR), which may be also referred to as PWM UPFR. The controller may be configured to control switching of the at least one switch of the rectifier. The switching frequency equals to the frequency (carrier frequency) of the PWM signal used by the controller for controlling the switching of the at least one switch. The switching frequency is greater (much greater) than the frequency of the AC voltage of the AC grid. Thus, the frequency of the PWM signal is greater (much greater) than the frequency of the AC voltage of the AC grid. A control cycle of the controller for controlling the switching may be shorter than the inverse of the switching frequency and, thus, may be shorter than the inverse of the frequency of the PWM signal respectively the period of the PWM signal. The control sampling rate may be faster respectively greater than PWM sampling. Each carrier cycle of the PWM signal may comprise one or more PWM reference computations (i.e. one or more control cycles of the controller). The terms "carrier period" respectively "inverse of the carrier frequency" may be used as synonyms for a carrier cycle of the PWM signal. The term "PWM carrier" may be used as a synonym for the term "PWM signal". Optionally, each carrier cycle of the PWM signal may comprise two PWM reference computations (double update of the PWM reference). The steps performable by the controller for controlling the switching of the at least one switch using a PWM signal may be performed by the controller at each control cycle.

The controller is configured to generate respectively compute, based on the computed AC voltage, the reference AC voltage for the PWM signal. In particular, the controller is configured to recursively compute the reference AC voltage for the PWM signal. For this, the controller may be configured to recursively compute the AC voltage of the input of the rectifier. Each recursion may correspond to a control cycle of the controller for controlling the switching of the at least one switch.

The at least one switch may comprise or be implemented by one or more transistors. For example, the one or more transistors may be at least one of bipolar junction transistors (BJTs), field effect transistors (FETs), such as metal-oxide semiconductor FETs (MOS FETs) and insulated gate bipolar transistors (IGBTs). The at least one switch may be implemented by any transistor types known in the art.

In an implementation form of the first aspect, the controller is configured to control, based on the reference AC voltage, a duty cycle of the PWM signal.

In particular, the controller is configured to set, based on the reference AC voltage, the duty cycle of the PWM signal. The PWM signal corresponds to pulses that repeat with the frequency of the PWM signal. The on-time of the pulses is the on-time of the PWM signal and the off-time between the pulses is the off-time of the PWM signal. The duty cycle is the ratio between the on-time of the pulses to the period of the PWM signal, i.e. the on-time of the pulses divided by the period of the PWM signal. Thus, increasing the on-time of the PWM signal (respectively of the pulses) while keeping the frequency of the PWM signal constant increases the duty cycle of the PWM signal and vice versa. The duty cycle may be obtained from the reference AC voltage and the DC-link voltage. The on-state corresponds to the time at which the AC voltage is clamped to zero Volts (because the at least one switch of the rectifier is in the conducting state); the off-state corresponds to the time at which the AC voltage is set to the DC-link voltage (the at least one switch of the rectifier is in the non-conducting state). Therefore, by setting the duty cycle it is possible to set the average AC voltage to a value between zero Volts (0 V) and the DC-link voltage. In other words, the translation of the desired reference AC voltage to a value between 0 V and the DC-link voltage may be achieved by setting the duty cycle of the PWM signal.

In an implementation form of the first aspect, the controller is configured to synchronize the AC current of the AC grid with the reference AC voltage by tracking a phase-angle of the reference AC voltage.

Since the reference AC voltage is provided based on the computed AC input voltage of the rectifier, the AC current of the AC grid (corresponding to the AC input current of the rectifier) is synchronized with regard to the AC input voltage of the rectifier. Thus, the above described drawbacks of using the voltage at the point of connection (PCC) may be overcome.

In an implementation form of the first aspect, the controller is configured to determine a zero-crossing of the AC voltage of the AC grid based on the reference AC voltage.

In other words, the controller is configured to determine, based on the reference AC voltage, whether a zero-crossing of the AC voltage of the AC grid is present or not. That is, the controller is configured to detect a zero-crossing of the AC voltage of the AC grid.

In an implementation form of the first aspect, the controller is configured to determine whether the computed AC voltage is smaller than or equal to the DC voltage of the output of the rectifier. The passage "determine whether the computed AC voltage is smaller than or equal to the DC voltage of the output of the rectifier" may be understood as "determine whether the computed instantaneous AC voltage is smaller than or equal to the DC voltage of the output of the rectifier". The instantaneous AC voltage (i.e. the instantaneous value of the AC voltage) is a scalar number. In particular, at a current time the controller may be configured to determine whether the value of the computed AC voltage at the current time is smaller than or equal to the DC voltage of the output of the rectifier. The controller may be configured to determine whether the computed instantaneous AC voltage (i.e. an instantaneous value of the computed AC voltage) is smaller than or equal to the DC voltage of the output of the rectifier.

In an implementation form of the first aspect, the controller is configured to stop a recursive computation of the reference AC voltage, in case a zero-crossing of the AC voltage of the AC grid is present.

This allows to limit the switching operation of the at least one switch in case a zero-crossing of the AC voltage of the AC grid is present. As a result, the zero-crossing distortion may be minimized and, thus, the THDi, efficiency and reliability of the rectifier may be improved.

In an implementation form of the first aspect, the controller is configured to stop a recursive computation of the reference AC voltage, in case the computed AC voltage is greater than the DC voltage of the output of the rectifier.

This allows to limit the switching operation of the at least one switch in case the computed AC input voltage of the rectifier is greater than the DC output voltage of the rectifier (i.e. a saturation event is present).

The controller is configured to stop a recursive computation of the reference AC voltage, in case at least one of the following is valid: a zero-crossing of the AC voltage of the AC grid is present and the computed AC voltage is greater than the DC voltage of the output of the rectifier.

In an implementation form of the first aspect, the controller is configured to compute, using a first control loop, a reference DC current based on the DC voltage of the output of the rectifier and a reference DC voltage for the DC voltage of the output of the rectifier. Further, the controller may be configured to provide a sinusoidal waveform, using a phase locked loop, based on the reference AC voltage. Furthermore, the controller may be configured to compute a reference AC current for the AC current of the AC grid based on the reference DC current and the sinusoidal waveform. Moreover, the controller is configured to compute, using a second control loop, the AC voltage of the input of the rectifier based on the AC current of the AC grid and the reference AC current.

The first control loop may be referred to as outer-loop control loop. The first control loop is configured to compute an error between the reference DC voltage for the DC output voltage of the rectifier and the actual DC output voltage of the rectifier being a feedback signal to provide a reference DC current. The reference DC current is used for generating a reference AC current for the AC current of the AC grid. The amplitude of the reference AC current is the DC current (the reference DC current) computed by the first control loop. In other words, the outer-loop control loop is configured to regulate the DC output voltage of the rectifier with regard to the reference DC voltage for the DC output voltage by setting a proper amplitude for the reference AC current (AC current reference). The second control loop is used by the controller for tracking the reference AC current, which is computed using the output/outcome of the first control loop (DC voltage loop). The output of the second control loop is the AC voltage of the input of the rectifier for providing the reference AC voltage for the PWM signal. The controller may use the reference AC voltage for establishing the duty cycle of the PWM signal.

The phase locked loop (PLL) is configured to track the fundamental phase-angle of its input. Thus, the phase locked loop may be configured to track the phase-angle of the reference AC voltage and provide a corresponding sinusoidal waveform. In particular, the controller may be configured to compute the reference AC current for the AC current of the AC grid by inputting the reference DC current provided by the first control loop and the sinusoidal waveform provided by the phase locked loop to a multiplier. The reference AC current for the AC current of the AC grid is the output of said multiplier.

The second control loop may be referred to as inner-loop control loop or current control loop. In particular, the second control loop is configured to compute an error between the reference AC current for the AC current of the AC grid and the actual AC current of the AC grid being a feedback signal. In other words, the outer-loop control loop is configured to regulate the AC current of the AC grid input to the rectifier with regard to the reference AC current for the AC current of the AC grid.

The DC voltage of the output of the rectifier may be referred to as a DC-link voltage. The aforementioned computation of the reference DC current, reference AC current and AC voltage of the input of the rectifier may be performed for a control cycle. In particular, the controller may be configured to generate respectively compute the sinusoidal waveform, using the phase locked loop, based on the reference AC voltage. In particular, the controller may be configured to determine, using the phase locked loop, a zero-crossing of the AC voltage of the AC grid based on the reference AC voltage.

In an implementation form of the first aspect, the controller is configured to provide the sinusoidal waveform by inputting the reference AC voltage to the phase locked loop, in case the computed AC voltage is smaller than or equal to the DC voltage of the output of the rectifier.

The controller is configured to generate respectively compute the sinusoidal waveform by inputting the reference AC voltage to the phase locked loop, in case the computed AC voltage is smaller than or equal to the DC voltage of the output of the rectifier.

In an implementation form of the first aspect, the controller is configured to determine a zero-crossing of the AC voltage of the AC grid by inputting the reference AC voltage to the phase locked loop, in case the computed AC voltage is smaller than or equal to the DC voltage of the output of the rectifier.

In an implementation form of the first aspect, the controller is configured to compute an error between the AC current of the AC grid and the reference AC current.

In an implementation form of the first aspect, the controller is configured to amplify the error, and compute the AC voltage of the input of the rectifier by adding an estimation of the AC voltage of the AC grid to the amplified error.

In an implementation form of the first aspect, the controller is configured to compute a difference by subtracting an estimation of the AC voltage of the AC grid from the reference AC voltage. Further, the controller may be configured to compute an output of a selective harmonic amplifier by inputting the difference to the selective harmonic amplifier. Furthermore, the controller may be configured to compute a sum of the error and the output of the selective harmonic amplifier.

Moreover, the controller may be configured to amplify the sum, and compute the AC voltage of the input of the rectifier by adding an estimation of the AC voltage of the AC grid to the amplified sum.

The computed sum may be referred to as an error of particular harmonic components. In particular, the particular harmonic components may be defined by the selective harmonic amplifier. The selective harmonic amplifier may achieve theoretically infinite gain at selected harmonics by a proper transfer function.

**In** an implementation form of the first aspect, the controller is configured to compute an output of the selective harmonic amplifier by inputting
- the difference to the selective harmonic amplifier, in case no zero-crossing of the AC voltage of the AC grid is present and/or the computed AC voltage is smaller than or equal to the DC voltage of the output of the rectifier, and
- a value of zero Volts (0 V) to the selective harmonic amplifier, in case a zero-crossing of the AC voltage of the AC grid is present and/or the computed AC voltage is greater than the DC voltage of the output of the rectifier.

This allows to disable the function of the selective harmonic amplifier in case a zero-crossing of the AC voltage of the AC grid is present or in case of a saturation event (i.e. compute AC voltage is greater than the DC output voltage of the rectifier). As a result accumulation of a control error of the switching control may be prevented in the aforementioned cases.

In particular, the controller may be configured to input the difference to the selective harmonic amplifier, in case at least one of the following is valid: no zero-crossing of the AC voltage of the AC grid is present and the computed AC voltage is smaller than or equal to the DC voltage of the output of the rectifier. The controller may be configured to input a value of zero Volts to the selective harmonic amplifier, in case at least one of the following is valid: a zero-crossing of the AC voltage of the AC grid is present and the computed AC voltage is greater than the DC voltage of the output of the rectifier.

In an implementation form of the first aspect, the controller is configured to estimate, using the phase locked loop, the AC voltage of the AC grid.

In an implementation form of the first aspect, the controller is configured to estimate the AC voltage (i.e. the AC voltage amplitude) of the AC grid by inputting the reference AC voltage to the phase locked loop, in case the computed AC voltage is smaller than or equal to the DC voltage of the output of the rectifier.

The phase locked loop (PLL) is a non-linear filter, implemented by digital signal processing, which is configured to determine the phase-angle of the fundamental component (e.g. 50 Hz or 60 Hz component) of an input signal input to the phase locked loop and filter out harmonics and noise. The term "main component" may be used as a synonym for the term "fundamental component". The phase locked loop may be configured to compute the amplitude of this fundamental component. In particular, the PLL may be implemented by or may be a non-linear digital algorithm configured to track in real time, phase-angle and amplitude of the fundamental component (50 Hz or 60 Hz component) of its input. Having amplitude and phase-angle information of the main component, reconstruction of the waveform may be achieved (waveform = amplitude x sine(phase-angle)).

In an implementation form of the first aspect, the controller is configured to provide a second reference AC voltage based on at least one of the AC current of the AC grid and a delayed version of the reference AC voltage, and at least one of the DC voltage of the output of the rectifier and a feedback signal from the phase locked loop.

This allows to provide a suitable input to the phase locked loop in case of strong transients. Transients comprise (but are not limited to) start-up operation of the rectifier, grid-faults of the AC grid, DC-load step changes (when a load is connected to the output of the rectifier), etc.

In particular, the controller is configured to generate respectively compute the second reference AC voltage based on at least one of the AC current of the AC grid and a delayed version of the reference AC voltage, and based on at least one of the DC voltage of the output of the rectifier and a feedback signal from the phase locked loop.

The delayed version of the reference AC voltage corresponds to the reference AC voltage delayed by an integer number of control cycles performed by the controller for controlling the rectifier. The integer number is equal to or greater than one. In particular, each control cycle is shorter respectively less than the period respectively inverse frequency of the PWM signal used by the controller for controlling the rectifier. The frequency of the PWM signal is greater than the frequency of the AC voltage of the AC grid.

In an implementation form of the first aspect, the controller is configured to compute Fourier transform grid-frequency components of at least one of the AC current of the AC grid and the delayed version of the reference AC voltage. Further, the controller may be configured to estimate for the Fourier transform grid-frequency components phase information. Furthermore, the controller may be configured to estimate amplitude information based on at least one of the DC voltage of the output of the rectifier and the feedback signal from the phase locked loop. Moreover, the controller may be configured to provide the second reference AC voltage based on the phase information and the amplitude information.

In particular, the controller is configured to generate respectively compute the second reference AC voltage based on the phase information and the amplitude information. The Fourier transform grid-frequency components (i.e. the Fourier coefficients) apply for the main frequency of the AC grid, which may be 50 Hz or 60 Hz depending on the country. For example in Europe the frequency of the AC grid is 50 Hz.

In an implementation form of the first aspect, the controller is configured to provide the sinusoidal waveform based on the second reference AC voltage by inputting the second reference AC voltage to the phase locked loop, in case the computed AC voltage is greater than the DC voltage of the output of the rectifier.

In an implementation form of the first aspect, the controller is configured to estimate the AC voltage of the AC grid based on the second reference AC voltage by inputting the second reference AC voltage to the phase locked loop, in case the computed AC voltage is greater than the DC voltage of the output of the rectifier.

In an implementation form of the first aspect, the controller is configured to determine a zero-crossing of the AC voltage of the AC grid based on the second reference AC voltage by inputting the second reference AC voltage to the phase locked loop, in case the computed AC voltage is greater than the DC voltage of the output of the rectifier.

In an implementation form of the first aspect, the reference AC voltage is equal to the computed AC voltage.

In an implementation form of the first aspect, the controller is configured to compare the computed AC voltage with the DC voltage of the output of the rectifier. Further, the controller may be configured to provide the reference AC voltage such that
- the reference AC voltage is equal to the computed AC voltage in case the computed AC voltage is smaller than or equal to the DC voltage of the output of the rectifier, and
- the reference AC voltage is equal to the DC voltage of the output of the rectifier in case the computed AC voltage is greater than the DC voltage of the output of the rectifier.

In an implementation form of the first aspect, the controller is configured to use the reference AC voltage for controlling the duty cycle of the PWM signal, in case no zero-crossing of the AC voltage of the AC grid is present, and set the duty cycle of the PWM signal within a range between 97% and 100%, optional to a duty cycle of 100%, in case a zero-crossing of the AC voltage of the AC grid is present.

By setting the duty cycle to a theoretical value of 100%, a current path for currents during a zero-crossing of the AC voltage of the AC grid via other electrical components (such as diodes) than the at least one switch of the rectifier may be avoided in order to avoid commutation losses and current distortion.

In order to achieve the controller according to the first aspect of the disclosure, some or all of the implementation forms and optional features of the first aspect, as described above, may be combined with each other.

A second aspect of the disclosure provides a rectifier arrangement comprising a controller according to first aspect of the disclosure, as described above, and a rectifier for rectifying an AC voltage of an AC grid. The rectifier comprises at least one switch controllable by the controller for short-circuiting an input of the rectifier. The controller is configured to control switching of the at least one switch of the rectifier using a pulse-width modulation (PWM) signal.

In an implementation form of the second aspect, the rectifier comprises at least two diodes for rectifying the AC voltage of the AC grid. The at least two diodes and the at least one switch are electrically connected such that the at least one switch is configured to prevent conduction of the at least two diodes by short-circuiting the input.

Optionally, the rectifier arrangement may comprise two or more circuit branches (in particular two or three circuit branches), wherein each circuit branch may comprise at least one rectifier for rectifying an AC voltage of an AC grid. The at least one rectifier of each circuit branch may be implemented as outlined above with regard to the rectifier. The circuit branch may be referred to as "legs" or "phase" of the rectifier arrangement. The rectifier arrangement may be a solid state transformer (SST). Optionally, the rectifier arrangement may be a SST having a three-phase cascaded H-bridge (CHB) topology.

The above description of the SST of Figure 1 may be correspondingly valid for an implementation form of the rectifier arrangement of the second aspect. The above description of the rectifier of Figure 2 may be correspondingly valid for any rectifier of an implementation form of the rectifier arrangement of the second aspect.

The above description of the controller according to the first aspect is correspondingly valid for the rectifier arrangement of the second aspect. In particular, the above description of a rectifier controllable by the controller according to the first aspect is correspondingly valid for the rectifier of the rectifier arrangement. Accordingly, the description of the rectifier of the rectifier arrangement of the second aspect is correspondingly valid for the rectifier controllable by the controller of the first aspect.

The rectifier arrangement of the second aspect and its implementation forms and optional features achieve the same advantages as the controller of the first aspect and its respective implementation forms and respective optional features.

In order to achieve the rectifier arrangement according to the second aspect of the disclosure, some or all of the implementation forms and optional features of the second aspect, as described above, may be combined with each other.

A third aspect of the disclosure provides a method for controlling a rectifier for rectifying an AC voltage of an AC grid. The rectifier comprises at least one switch controllable for short-circuiting an input of the rectifier. The method comprises controlling switching of the at least one switch using a pulse-width modulation (PWM) signal and computing, using an AC current of the AC grid and a DC voltage of an output of the rectifier, an AC voltage of the input of the rectifier. The method further comprises providing, based on the computed AC voltage, a reference AC voltage for the PWM signal.

The description of the controller of the first aspect is correspondingly valid for the method of the third aspect.

In an implementation form of the third aspect, the method comprises controlling, based on the reference AC voltage, a duty cycle of the PWM signal.

In an implementation form of the third aspect, the method comprises synchronizing the AC current of the AC grid with the reference AC voltage by tracking a phase-angle of the reference AC voltage.

In an implementation form of the third aspect, the method comprises determining a zero-crossing of the AC voltage of the AC grid based on the reference AC voltage.

In an implementation form of the third aspect, the method comprises determining whether the computed AC voltage is smaller than or equal to the DC voltage of the output of the rectifier.

In an implementation form of the third aspect, the method comprises stopping a recursive computation of the reference AC voltage, in case a zero-crossing of the AC voltage of the AC grid is present.

In an implementation form of the third aspect, the method comprises stopping a recursive computation of the reference AC voltage, in case the computed AC voltage is greater than the DC voltage of the output of the rectifier.

In an implementation form of the third aspect, the method comprises computing, using a first control loop, a reference DC current based on the DC voltage of the output of the rectifier and a reference DC voltage for the DC voltage of the output of the rectifier. Further, the method may comprise providing a sinusoidal waveform, using a phase locked loop, based on the reference AC voltage. Furthermore, the method may comprise computing a reference AC current for the AC current of the AC grid based on the reference DC current and the sinusoidal waveform. Moreover, the method may comprise computing, using a second control loop, the AC voltage of the input of the rectifier based on the AC current of the AC grid and the reference AC current.

In an implementation form of the third aspect, the method comprises providing the sinusoidal waveform by inputting the reference AC voltage to the phase locked loop, in case the computed AC voltage is smaller than or equal to the DC voltage of the output of the rectifier.

In an implementation form of the third aspect, the method comprises determining a zero-crossing of the AC voltage of the AC grid by inputting the reference AC voltage to the phase locked loop, in case the computed AC voltage is smaller than or equal to the DC voltage of the output of the rectifier.

In an implementation form of the third aspect, the method comprises computing an error between the AC current of the AC grid and the reference AC current.

In an implementation form of the third aspect, the method comprises amplifying the error, and computing the AC voltage of the input of the rectifier by adding an estimation of the AC voltage of the AC grid to the amplified error.

In an implementation form of the third aspect, the method comprises computing a difference by subtracting an estimation of the AC voltage of the AC grid from the reference AC voltage. Further, the method may comprise computing an output of a selective harmonic amplifier by inputting the difference to the selective harmonic amplifier. Furthermore, the method may comprise computing a sum of the error and the output of the selective harmonic amplifier. Moreover, the method may comprise amplifying the sum, and computing the AC voltage of the input of the rectifier by adding an estimation of the AC voltage of the AC grid to the amplified sum.

In an implementation form of the third aspect, the method comprises computing an output of the selective harmonic amplifier by inputting
- the difference to the selective harmonic amplifier, in case no zero-crossing of the AC voltage of the AC grid is present and/or the computed AC voltage is smaller than or equal to the DC voltage of the output of the rectifier, and
- a value of zero Volts (0 V) to the selective harmonic amplifier, in case a zero-crossing of the AC voltage of the AC grid is present and/or the computed AC voltage is greater than the DC voltage of the output of the rectifier.

In an implementation form of the third aspect, the method comprises estimating, using the phase locked loop, the AC voltage of the AC grid.

In an implementation form of the third aspect, the method comprises estimating the AC voltage of the AC grid by inputting the reference AC voltage to the phase locked loop, in case the computed AC voltage is smaller than or equal to the DC voltage of the output of the rectifier.

In an implementation form of the third aspect, the method comprises providing a second reference AC voltage based on at least one of the AC current of the AC grid and a delayed version of the reference AC voltage, and at least one of the DC voltage of the output of the rectifier and a feedback signal from the phase locked loop.

In an implementation form of the third aspect, the method comprises computing Fourier transform grid-frequency components of at least one of the AC current of the AC grid and the delayed version of the reference AC voltage. Further, the method may comprise estimating for the Fourier transform grid-frequency components phase information. Furthermore, the method may comprise estimating amplitude information based on at least one of the DC voltage of the output of the rectifier and the feedback signal from the phase locked loop. Moreover, the method may comprise providing the second reference AC voltage based on the phase information and the amplitude information.

In an implementation form of the third aspect, the method comprises providing the sinusoidal waveform based on the second reference AC voltage by inputting the second reference AC voltage to the phase locked loop, in case the computed AC voltage is greater than the DC voltage of the output of the rectifier.

In an implementation form of the third aspect, the method comprises estimating the AC voltage of the AC grid based on the second reference AC voltage by inputting the second reference AC voltage to the phase locked loop, in case the computed AC voltage is greater than the DC voltage of the output of the rectifier.

In an implementation form of the third aspect, the method comprises determining a zero-crossing of the AC voltage of the AC grid based on the second reference AC voltage by inputting the second reference AC voltage to the phase locked loop, in case the computed AC voltage is greater than the DC voltage of the output of the rectifier.

In an implementation form of the third aspect, the reference AC voltage is equal to the computed AC voltage.

In an implementation form of the third aspect, the method comprises comparing the computed AC voltage with the DC voltage of the output of the rectifier. Further, the method may comprise providing the reference AC voltage such that
- the reference AC voltage is equal to the computed AC voltage in case the computed AC voltage is smaller than or equal to the DC voltage of the output of the rectifier, and
- the reference AC voltage is equal to the DC voltage of the output of the rectifier in case the computed AC voltage is greater than the DC voltage of the output of the rectifier.

In an implementation form of the third aspect, the method comprises using the reference AC voltage for controlling the duty cycle of the PWM signal, in case no zero-crossing of the AC voltage of the AC grid is present, and setting the duty cycle of the PWM signal within a range between 97% and 100%, optional to a duty cycle of 100%, in case a zero-crossing of the AC voltage of the AC grid is present.

The method of the third aspect and its implementation forms and optional features achieve the same advantages as the controller of the first aspect and its respective implementation forms and respective optional features.

In order to achieve the method according to the third aspect of the disclosure, some or all of the implementation forms and optional features of the third aspect, as described above, may be combined with each other.

A fourth aspect of the disclosure provides a computer program comprising program code for performing when implemented on a processor, a method according to the third aspect or any of its implementation forms.

A fifth aspect of the disclosure provides a computer program comprising a program code for performing the method according to the third aspect or any of its implementation forms.

An sixth aspect of the disclosure provides a computer comprising a memory and a processor, which are configured to store and execute program code to perform the method according to the third aspect or any of its implementation forms.

A seventh aspect of the disclosure provides a non-transitory storage medium storing executable program code which, when executed by a processor, causes the method according to the third aspect or any of its implementation forms to be performed.

An eighth aspect of the disclosure provides a computer readable storage medium storing executable program code which, when executed by a processor, causes the method according to the third aspect or any of its implementation forms to be performed.

The computer program of the fourth aspect, the computer program of the fifth aspect, the computer of the sixth aspect, the non-transitory storage medium of the seventh aspect and the computer readable storage medium of the eighth aspect each achieve the same advantages as the controller of the first aspect and its respective implementation forms and respective optional features.

It has to be noted that all devices, elements, units and means described in the disclosure could be implemented in software or hardware elements or any kind of combination thereof. All steps which are performed by the various entities described in the disclosure as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms of the disclosure will be explained in the following description of specific embodiments in relation to the enclosed drawings, in which
- **Figure 1**: shows an example of a three-phase cascade H-bridge (CHB) connected to an AC grid;
- **Figure 2**: shows an example of a rectifier and rectifier arrangement comprising the rectifier;
- **Figure 3**: shows examples 3a-3c, of implementation forms of the rectifier of Figures 1 and 2;
- **Figure 4**: shows an example of a block diagram of a control of the switch of the rectifier of Figure 2 with a PWM signal;
- **Figure 5**: an increase of current distortion in case of a non-optimal operation during a zero-crossing of the rectifier of Figure 2;
- **Figure 6**: shows a block diagram of a control of the switch of the rectifier of Figure 2 with a PWM signal according to an example of the invention;
- **Figure 7**: shows a block diagram of a part of the control of Figure 6 according to an example of the invention;
- **Figure 8**: shows an examples 8a-8d, of the AC current behavior during steady state for the control of Figure 6 and a conventional control;
- **Figure 9**: shows an examples 9a-9d, of steady-state time domain waveforms for an active filter test when using the control of Figure 6; and
- **Figure 10**: shows an example of the harmonic spectrum corresponding to the results shown in Figure 9.

In the Figures, corresponding elements are labeled with the same reference sign.

### DETAILED DESCRIPTION OF EMBODIMENTS

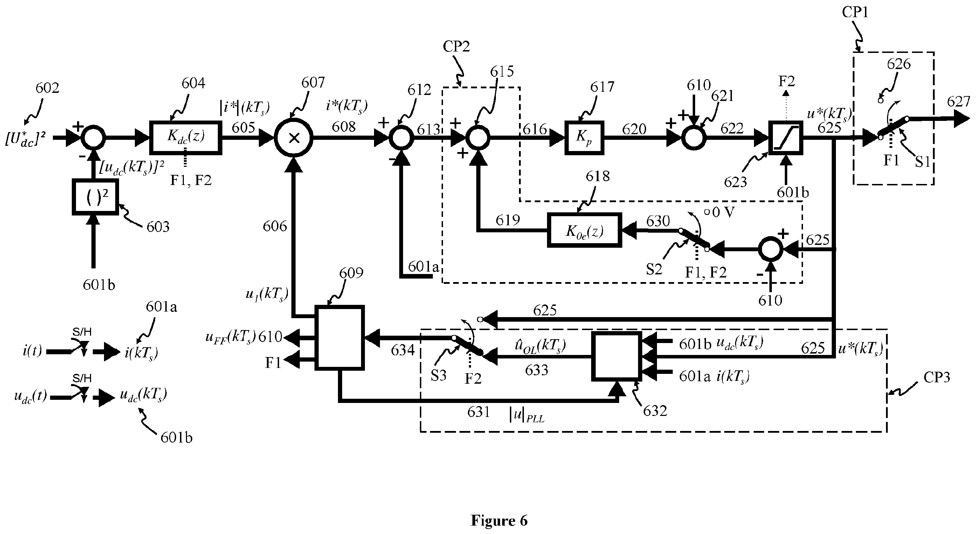

**Figure 6** shows a block diagram of a control of the switch of the rectifier of Figure 2 with a PWM signal according to an example of the invention. The block diagram of Figure 6 is an example of the control that the controller according to the first aspect is configured to perform for controlling the switch of the rectifier. Therefore, the above description of the controller of the first aspect is correspondingly valid for describing Figure 6.

Figure 2 shows an example of a rectifier arrangement according to an example of the invention, when the controller is a controller according to the first aspect of the disclosure. The rectifier of Figure 2 is an example of an implementation of a rectifier that is controllable by the controller of the first aspect. As outlined already above, the rectifier may be differently implemented, as long as the rectifier comprises at least one switch that is controllable by the controller for short-circuiting the input of the rectifier. That is, the at least one switch is configured to short-circuit the input of the rectifier. Examples of other implementation forms of the rectifier are shown in Figures 3 (a), (b) and (c). In the following description of Figure 6 reference is made to the rectifier of Figure 2. The controller shown in Figure 2 may perform a control of the at least one switch 1b of the rectifier 1 using a PWM signal according to the block diagram of Figure 6.

As shown in Figure 6, the DC voltage 601b (e.g. u_{dc}(kTₛ)) of the output of the rectifier 1 (may be referred to as DC output voltage or DC-link voltage)) and a reference DC voltage for the DC output voltage 601b may be used for computing a reference DC current 605 (e.g. |i*|(kTₛ)) by a first control loop. According to an embodiment, an error between the squared DC output voltage 603 (e.g. [u_{dc}(kTₛ)]²) and a corresponding reference 602 (e.g. ${\left[{U}_{dc}^{∗}\right]}^{2}$) for the squared DC output voltage may be computed and input to a processing block 604 for computing the reference DC current 605. The processing block 604 may be configured to amplify the error between the squared DC output voltage and the corresponding reference 602, giving rise to a DC current reference 605. The circle representing the computation of the aforementioned error and the processing block 604 may be part or may form the first control loop. The first control loop may be referred to as outer-loop control loop. The first control loop may regulate the DC output voltage 601b of the rectifier 1 with regard to the reference DC voltage for the DC output voltage 601b. In particular, the reference DC current 605 may be obtained by signal processing of the error (DC-link error) obtained by subtracting the variable 603 (e.g. the squared DC output voltage 603) from the reference 602 for the variable 603 (e.g. reference 602 for the squared DC output voltage 603). A linear digital filter, which may be defined as a rational function in the Z-domain (i.e. K_{dc}(z)) of the processing block 604 may receive the error as an input and compute the reference DC current 605 as an output (a discrete filter may be implemented as a recursive algorithm in the controller, e.g. in a microcontroller). The squared DC output voltage 603 is proportional to the energy stored in the DC-link respectively on the DC side of the rectifier 1. It may be a task of the rectifier 1 to keep the DC output voltage 601b constant (average value) for different load consumptions of a load 5 connected to the output OUT, OUT' of the rectifier 1 (inside the normal operation ranges). The AC current 601a of the AC grid flows into the input of the rectifier 1 when the rectifier 1 is connected (via an input filter 4) to the AC grid (as shown in Figure 2). In Figure 2, the AC current 601a of the AC grid is referenced by the symbol "I_{grid}".

As shown on the bottom left of Figure 6, the DC output voltage 601b of the rectifier 1 and the AC current 601a of the AC grid may be obtained. In particular, they may be obtained through a digital control system (e.g. sample and hold (S/H) circuits). The block 603 represents the operation of squaring the DC output voltage 601b. The disclosure is not limited to using the squared DC output voltage and a corresponding reference 602 for computing the reference DC current 605. The first control loop (may be referred as outer-loop controller) may compute the reference DC current 605, in particular an amplitude of the reference DC current 605. For this, the first control loop, in particular the processing block 604, may comprise an integrator. Two flags F1 and F2 may stop the computation of the reference DC current 605, in particular the integrator of the first control loop, when being activated respectively being set. With regard to the flags F1 and F2, the terms "trigger" and "enable" may be used as synonyms for the term "activate". The flag F1 is a zero-crossing detection flag and flag F2 is a saturation flag. The criteria for activating respectively setting these Flags F1 and F2 are described later.

A multiplier 607 combines the reference DC current (DC reference) provided by the first control loop and a sinusoidal waveform 606 output from a phase locked loop 609 (PLL) to compute an reference AC current 608 (AC reference, e.g. i*(kTₛ)) for the AC current 601a of the AC grid. The sinusoidal waveform 606 is employed to set the reference AC current as a 50Hz reference in case the AC grid provides an AC voltage and current with a nominal frequency of 50Hz or as a 60Hz reference in case the AC grid provides an AC voltage and current with a nominal frequency of 60Hz. In other words, the reference AC current 608 is set as a reference comprising a nominal frequency of the AC grid.

The PLL 9 may compute the sinusoidal waveform 606 (e.g. u₁(kTₛ)) as well as a feedforward signal 610 (e.g. u_{FF}(kTₛ)). In addition, the PLL 9 may be used for determining respectively detecting a zero-crossing of the AC voltage V_{grid} of the AC grid. That is, the PLL 9 may determine, whether a zero-crossing of the AC voltage V_{grid} of the AC grid is present or not. In case a zero-crossing is present the zero-crossing detection flag F1 is activated respectively set. In particular, the flag F1 may be activated respectively set when detecting the neighborhood of phase-angles around 0 degree (0°) and 180 degrees (180°) of the (sinusoidal) AC voltage V_{grid} of the AC grid. In other words, assuming the fundamental component of the PLL input 634 is a sine function, a zero-crossing may be detected by the PLL 609 based on the PLL input 634 when the phase angle is in the region near 0 degrees (positive zero-crossing) and 180 degrees (negative zero-crossing).

When no zero-crossing is present, the flag F1 is deactivated respectively not set. The feedforward signal 610 is an estimation 210 of the AC voltage V_{grid} of the AC grid (may be referred to as grid-voltage), in particular an estimation 210 of the fundamental component of the AC voltage V_{grid} of the AC grid, that permits to avoid large control action deviations during the start-up and during transients of the rectifier operation. The input to the PLL 609 is described later. The PLL 609 may be implemented by or may be a non-linear digital algorithm configured to track in real time, phase-angle and amplitude of the fundamental component (50 Hz or 60 Hz component) of its input. Having amplitude and phase-angle information of the main component, allows reconstruction of the waveform (waveform = amplitude x sine(phase-angle)).

The reference AC current 608 and the AC current 601a of the AC grid are compared with each other to compute an error 613 between the AC current 601a of the AC grid and the reference AC current 608. This is represented by the circle 612 of Figure 6. The error 613 is optionally added to the output 619 of an optional selective harmonic amplifier 618 (may be referred to as selective harmonic amplifier controller or selective harmonic filter) to compute a sum 616 of the error 613 and an output 619 of the selective harmonic amplifier 618. This is represented by the circle 615 of Figure 6. The selective harmonic amplifier 618 may be configured to over-amplify one or more selected harmonic components, so the performance of the controller is highly improved for such selected one or more frequencies. In particular, this functionality may be disabled when the system (rectifier 1) is not working in a linear operation (e.g. during transients).

The symbol K₀ₑ(z) shown in Figure 6 with regard to the selected harmonic amplifier 618 represents a digital filter that over-amplifies selected harmonic error components in order to reduce to zero such error in the steady-state.

In case the optional selective harmonic amplifier 618 is not present (not shown in Figure 6), the error 613 is amplified to generate an amplified error 620. The block 617 represents the amplification. In particular, the block 617 may represent a proportional controller (i.e. a gain) that may also be referred to as digital (memoryless) filter. The output of this proportional controller respectively digital (memoryless) filter may be a multiplication of the input 616 by a constant Kp. In case the optional harmonic amplifier 618 is present, the sum 616 (of the error 613 and the output 619 of the selective harmonic amplifier 618) is amplified to generate an amplified sum 620. By a multiple harmonic resonant control provided by the optional selective harmonic amplifier 618, the zero-crossing of the AC voltage V_{grid} of the AC grid may be caused to coincide with the output 606 (sinusoidal waveform) of the PLL 609. That is a removal of harmonics interactions may be achieved. Next the AC input voltage 622 (AC voltage of the input of the rectifier) is computed by adding the estimation 610 of the AC voltage V_{grid} of the AC grid (i.e. feedforward signal 610) to the amplified error 620 (no selective harmonic amplifier 618) or the amplified sum 620 (selective harmonic amplifier is present). This is represented by the circle 621 of Figure 6.

According to an embodiment of the disclosure, the reference AC voltage 625 (PWM reference, e.g. u*(kTₛ)) for the PWM signal is the computed AC input voltage 622 (not shown in Figure 6). According to another embodiment, the computed AC voltage 622 is compared with the DC output voltage 601b of the rectifier (DC voltage of the output of the rectifier). This is represented by the saturator block 623 of Figure 6. In case the computed AC voltage 622 is smaller or equal to the DC output voltage 601b, the reference AC voltage 625 for the PWM signal is equal to the computed AC voltage 622. That is, the output of the saturator block 623 is the computed AC voltage 622 in case the computed AC voltage 622 is smaller or equal to the DC output voltage 601b. In case the computed AC voltage 622 is greater than the DC output voltage 601b, the reference AC voltage 625 for the PWM signal is equal to the DC output voltage 601b. That is, the output of the saturator block 623 is the DC output voltage 601b, in case the computed AC voltage 622 is greater than the DC output voltage 601b. The saturation flag F2 is activated respectively set, in case the computed AC voltage 622 is greater than the DC output voltage 601b. In case the computed AC voltage 622 is smaller than or equal to the DC output voltage 601b, the saturation flag F2 is deactivated respectively not set.

The circle 612 for computing the error 613, the amplification block 617 and the optional saturator block 623 may form respectively be part of a second control loop. This second control loop may be referred to as inner-loop control loop respectively inner-loop controller. In particular, it is a current control loop. The second control loop may regulate the AC current 601a of the AC grid input to the rectifier 1 with regard to the reference AC current 608 for the AC current 601a of the AC grid. The optional selective harmonic amplifier 618 may be configured to over-amplify one or more selected harmonic components inside the second control loop, so the performance of the controller is highly improved for such selected one or more frequencies. In particular, this functionality may be disabled when the system (rectifier 1) is not working in a linear operation (e.g. during transients).

The control scheme of Figure 6 may optional comprise a selector S1 for selecting, whether the reference AC voltage 625 for the PWM signal is used or not. In particular, the selector S1 may be present for selecting whether the reference AC voltage 625 for the PWM signal is used or not for computing the duty cycle of the PWM signal. The selector S1 is controlled respectively driven by the zero-crossing detection flag F1. In case the flag F1 is activated respectively set (i.e. a zero-crossing of the AC grid-voltage V_{grid} is present), a signal 626 is used as a reference 627 for the PWM signal. The signal is ideally zero Volts, but in practice it may be programmed near to zero Volts for hardware protection purposes. Ideally, this leads to a duty cycle of the PWM signal of 100%. In other words, when the flag F1 is activated, the signal 626 may cause the duty cycle of the PWM signal to be in a range between 97% and 100%, ideally to equal to 100%. When the zero-crossing detection flag F1 is deactivated, the reference AC voltage 625 for the PWM signal is used as a reference 627 for the PWM signal. The zero-crossing detection flag F1 may optionally be also used to freeze the accumulation of error of the harmonic function of the optional selective harmonic amplifier 618 (cf. optional selector S2 of Figure 6) and for stopping a computation of the reference DC current 605 (cf. block 604 of Figure 6). Due to some hardware protection requirements, the duty cycle upper limit of the duty cycle of the switching of the at least one switch 1b of the rectifier 1 may be slightly lower than 100%, e.g. between 97% and 100%. This is why the signal 626 equaling to zero Volts is a theoretical optimal value.

A difference may be computed by subtracting the estimation 610 of the AC voltage V_{grid} of the AC grid from the reference AC voltage 625. The difference may be used as an input 630 for the selective harmonic amplifier 618. According to an embodiment, the control scheme of Figure 6 may comprise a selector S2 for selecting the input 630 of the selective harmonic amplifier 618. The selector S2 is controlled respectively driven by the zero-crossing detection flag F1 and the saturation flag F2. In case each of the two flags F1 and F2 are deactivated, the selector S2 selects the aforementioned computed difference to be input as input 630 to the selective harmonic amplifier 618. That is, in case each of the two flags F1 and F2 are deactivated, the output 619 of the selective harmonic amplifier 618 is computed using the reference AC voltage 625 for the PWM signal. In case the zero-crossing detection flag F1 or the saturation flag F2 is activated, the selector S2 selects a value of zero Volts (0 V) to be input as input 630 to the selective harmonic amplifier 618. An error accumulation in the selective harmonic amplifier 618 may have an input equal to zero Volts, in case at least one of the two flags is activated. This operation corresponds to an anti-windup protection for the current control loop based on the AC current 601a of the AC grid and the reference AC current 608. In particular, the advantage of using the selector S2 is not accumulating error when the zero-crossing flag F1 or the saturation flag F2 is activated. The effect of using the selective harmonic amplifier 618 is to remove low order harmonics from the input current of the rectifier 1 being the AC current 601a of the AC grid. This also implies a reduction of the zero-crossing distortion in steady-state.

The selective harmonic amplifier 618 may be a plug-in amplifier. The optional selective harmonic amplifier 618 provides an innermost control loop inside the current control loop (current controller), i.e. inside the second control loop, using the AC current 601a of the AC grid and the computed reference AC current 608. This selective harmonic amplifier 618, in combination with a proportional gain of the amplification 617 of the current control loop, achieves open-loop infinite magnitude gain (in the frequency-domain) of the selected low order harmonics in steady-state. An infinite open-loop gain in the frequency domain allows achieving zero steady-state error in the time domain (for any particular frequency of interest).

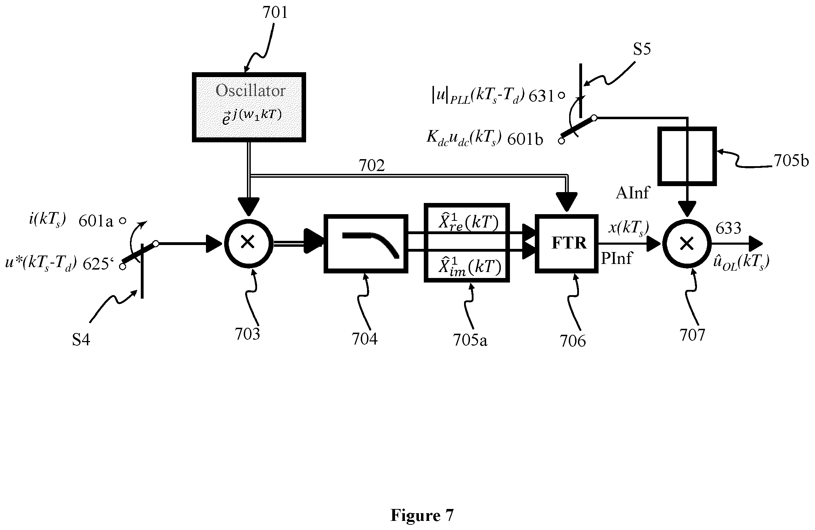

The reference AC voltage 625 may be input (as an input 634) to the phase locked loop 609 (PLL) for computing the sinusoidal waveform 606 and the feedforward signal 610 as well as determining whether a zero-crossing of the AC voltage V_{grid} of the AC grid is present or not. According to an embodiment, the control scheme of Figure 6 may comprise a selector S3 for selecting the input 634 of the PLL 609. The selector S3 is controlled respectively driven by the saturation flag F2. In case the flag F2 is deactivated, the selector S3 selects the reference AC voltage 625 for the PWM signal as input 634 to be input to the PLL 609. This corresponds to a steady-state operation. The state respectively mode, when the flag F2 is deactivated and, thus, the selector S3 selects the reference AC voltage 625 for the PWM signal as the input 634 of the PLL 609, may be referred to as auto-synchronization mode (AS mode). In case the flag F2 is activated (e.g. because the control loop based on the AC current 601a of the AC grid is or has been into saturation recently, or even during start up operation), the selector S3 selects a second reference AC voltage 633 (e.g. û_{OL}(kTₛ)) that is computed by an optional alternative synchronization path, represented by the block 632. The state respectively mode, when the flag F2 is activated, may be referred to as delayed control for synchronization mode (DCS mode). The rationale of the alternative synchronization path 632 is to provide a back-up input signal 633 to the PLL 609 in the transients for which the current control using the AC current 601a of the AC grid and the computed reference AC current 608 is not acting in the linear region (e.g. due to saturation, start-up, etc.). Thus, during strong transients (e.g. load step) when the current control loop, which is based on the AC current 601a of the AC grid and the computed reference AC current 608, sees saturation, an alternative delayed open-loop synchronization 632 may be used. Transients include (but are not limited to) start-up operation, grid-faults, DC-load step changes, etc. The back-up PLL input signal 633 (i.e. the second reference AC voltage 633) may be computed using the AC current 601a of the AC grid, the DC output voltage 601b of the rectifier 1, the reference AC voltage 625 (in particular a delayed version of the reference AC voltage 625 may be used inside the block 632) and a feedback signal 631 (e.g. |u|_{PLL}) from the PLL 609. The operation of the back-up PLL input generation respectively alternative synchronization path (represented by block 632) is described with regard to Figure 7. That is Figure 7 describes an example of the DCS mode. The control parts of the control scheme according to Figure 6 that are indicated by the reference signs "CP1, CP2" and "CP3" are optional. Thus, one or more of them may not be implemented.

**Figure** 7 shows a block diagram of a part of the control of Figure 6 according to an example of the invention. In particular, Figure 7 describes an example of the DCS mode, i.e. when the second reference AC voltage 633 is computed using the alternative synchronization path 632 shown in Figure 6.

The idea of the DCS mode respectively alternative synchronization path 632 is to use signals that are not altered during the transients. For a good phase-angle tracking of the fundamental signal the following variables may be considered. At least one of the AC current 601a of the AC grid (by physical nature, always in phase with the AC voltage of the AC grid) or a delayed version 625' of the reference AC voltage 625 (steady-state situation before the transient). A selector S4 may be used to choose between both input signals. In particular, the selector S4 may be controlled by a respective flag, e.g. current-voltage-flag (I/U-flag). As shown in Figure 7, the second reference AC voltage 633 may be computed using at least one of the AC current 601a of the AC grid and a delayed version 625' of the reference AC voltage 625. The delay T_{d} parameter may correspond to several integer number of control cycles before the main control saturation is enabled. Both outputs of the selector S4, i.e. either the AC current 601a of the AC grid or the delayed version 625' of the reference AC voltage 625 will have same phase-angle, since both the AC input voltage of the rectifier and the AC current 601a of the AC grid are in-phase when working in UPFR mode. The selector S4 is only optional. It is sufficient, when one of the AC current 601a of the AC grid and the delayed version 625' of the reference AC voltage 625 is used for computing the second reference AC voltage 633.

Once the input signal is selected by the selector S4, the Fourier transform components of the input signal may be computed to generate a signal in-phase with its fundamental component, which correspond to the angular frequency ω₁ (e.g. 2π50 rads or 2π60rads). To achieve that, this input signal is multiplied by two orthogonal oscillator signals of angular frequency ω₁ and amplitude one. In particular, as shown in Figure 7, the block 701 may generate two orthogonal unitary amplitude sinusoidal of the fundamental frequency (e.g. 50 Hz or 60 Hz). They set Fourier based vectors 702 for a real time computation of a recursive Fourier transform computation. The block 701 may comprise or be implemented by an oscillator. A multiplier 703 may be used to multiply the respective input selected by the selector S4 by the Fourier base vectors 702.

Next, the two output signals of the multiplier 703 may be filtered by a low pass filter 704 to remove the noise from the Fourier coefficients X¹ᵣₑ and X¹ᵢₘ. That is, the computation results of the multiplier 703 may be filtered by a low pass filter 704 to remove the information that is not needed for reconstructing the fundamental component in-phase with the AC current 601a of the AC grid and the delayed version 625' of the reference AC voltage 625

The Fourier transform reconstruction (FTR) block 706 may provide an unitary signal representing phase information PInf (e.g. x(kTs)), which is in-phase with the input. This signal is computed as follows: the oscillator orthogonal waves from the oscillator are multiplied by their corresponding Fourier coefficients X¹ᵣₑ and X¹ᵢₘ and added together. Then, an amplitude normalization to one (1) may be performed by dividing the reconstructed signal by an amplitude given by $\left|X\right| = \sqrt{{\left({X}_{re}^{1}\right)}^{2} + {\left({X}_{im}^{1}\right)}^{2}}$. By the aforementioned, a phase information Pinf for the fundamental component may be pre-estimated (the real estimation may be done by the PLL 609 shown in Figure 6).

Once the phase information for the fundamental component is pre-estimated, amplitude information AInf may be obtained using the DC output voltage 601b (DC-link voltage) or a delayed version of the feedback signal 631 from the PLL 609. In particular, the DC output voltage 601b may have a rough estimation of a line-to-line peak voltage of a three-phase circuit, or line to neutral peak voltage in a single-phase circuit. In particular, a delayed version of the PLL 609 output amplitude (as the feedback signal 631) may be employed as an estimation if the transient is not associated to a grid fault. An optional selector S5 decides between both options. Input 631 of the selector S5 considers the PLL output amplitude with a delay with regard to the saturation detection instant. The input 601b uses the information from the DC-link (DC side respectively output side of the rectifier): in passive operation, there is a proportional relation between the amplitude of the AC voltage of the AC grid and the peak voltage of the DC-link (i.e. the peak DC output voltage of the rectifier). The input 631 of the selector S5 is more suitable for real-time operation. The input 601b of selector S5 is mostly suitable for the start-up of a converter in which the rectifier 1 may be used. Optionally, in the case of start up of the rectifier, the selector S4 selects the AC current 601a of the AC grid and the selector S5 selects the DC output voltage 601b of the rectifier. At the optional blocks 705a and 705b the Fourier coefficients and the amplitude estimation may be frozen during a fault scenario. A multiplier 707 may combine the phase information PInf (computed using the AC current 601a of the AC grid or a delayed version 625' of the reference AC voltage 625) and the amplitude information AInf (computed using the DC output voltage 601b of the rectifier or the feedback signal 631 from the PLL 609) to compute the second reference AC voltage 633.

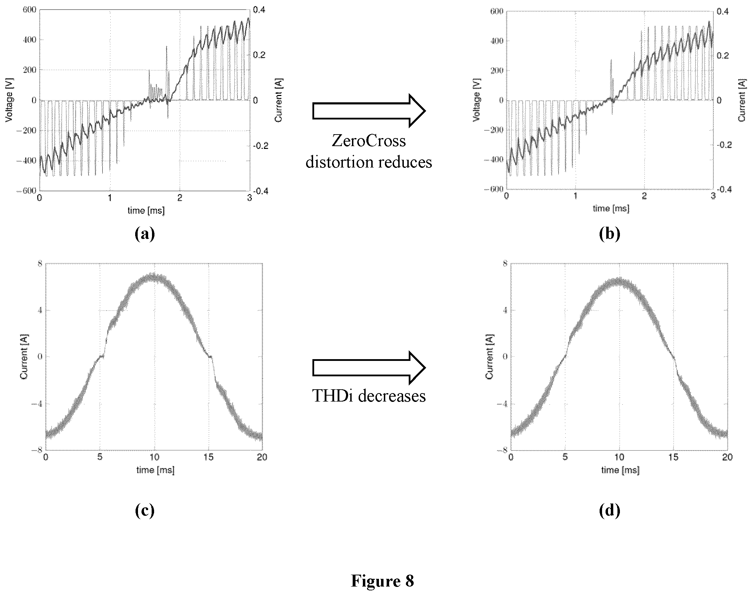

In the following with respect to Figure 8 to 10, a few of different simulation and real-time experimental tests are shown in order to show relevant performance obtained with the controller and control method proposed herein, i.e. the controller according to the first aspect and the method according to the third aspect.

Figure 8 shows an example of the AC current behavior during steady state for the control of Figure 6 and a conventional control. In particular, Figure 8 shows the results obtained by simulation when controlling a single-phase UPFR according to Figure 2. Figures 8 (a) and (c) show the results in case the UPFR of Figure 2 is controlled by a conventional control. Figures 8 (b) and (d) show the results in case the UPFR of Figure 2 is controlled using the control scheme of Figure 6. For the simulation the following data may be assumed:

| | |
|---|---|
| phase-neutral RMS | 230 V |
| DC-link voltage ref (active operation) | 500 V |
| grid inductance L_{grid} | 7 mH |
| input filter inductance 4a | 7 mH |
| short-circuit ratio of the experiment | SCR=1 |
| grid resistor (not shown in Figure 2) and input filter resistor 4b | 0.2 Ω |
| load resistor 5 | 178 Ω |

For the simulation, in the circuit of Figure 2, an AC voltage sensor may be arranged at the mid-point between the grid inductance L_{grid} and the input filter inductance 4a. This AC voltage sensor may feed the PLL when using a conventional approach. This AC sensor may be used in order to compare the proposed control scheme of Figure 6 (AC voltage sensor is not needed) to the conventional approach (i.e. placing an AC voltage sensor in the mid-point between the grid and the input filter 4 and use this voltage to feed the PLL input). The experiments are performed with a low short-circuit ration (SCR) in order to better visualize the benefits of the proposed control scheme according to the disclosure.

Figures 8 (a) and (c) show the performances when using an AC voltage sensor versus the control method proposed by the disclosure shown in Figures 8 (b) and (d). When looking at the current waveforms during the zero-crossing, Figure 8 (d) shows how the transition from negative to positive sub-cycle are smooth and almost undistorted. Thus, the controller and control method proposed by the disclosure reduces the zero-crossing distortion by finding the correct phase-angle of the zero cross and, eventually, this decreases the THDi.

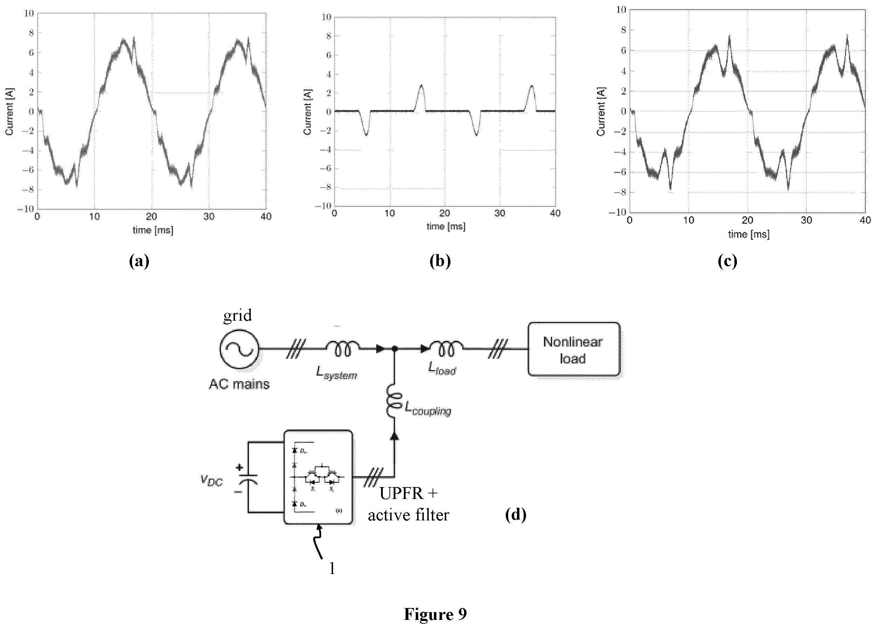

**Figure 9** shows an example of steady-state time domain waveforms for an active filter test when using the control of Figure 6.

Figure 9 (d) shows the configuration employed in an experimental test to show selective harmonic active filter functionality, which is added as a plug-in to the fundamental control. Aside the DC-link voltage regulation, which provides a reference for the fundamental current, the selected low order harmonics consumed by the non-linear load are a reference of the current control.

**Figures 9(a), (b) and (c)** show the steady-state performances of the UPFR system with active filtering functionality added for the 3rd, 5th and 7th harmonic. Figure 9 (a) shows a steady-state time domain waveform of the AC current of the AC grid for the active filter test. Figure 9 (b) shows a steady-state time domain waveform of the load current for the active filter test. Figure 9 (c) shows a steady-state time domain waveform of the UPFR current (i.e. the AC current input to the rectifier). The main choice to choose the aforementioned frequencies (3rd, 5th and 7th harmonic) is these are well below the current controller bandwidth. By visual inspection of the time waveforms of Figure 9, it is noticed that the notching of the grid-current are smaller than the ones provided by the UPFR device, which indicates a reduction of the grid current THDi (i.e., the main objective of the active filtering control).

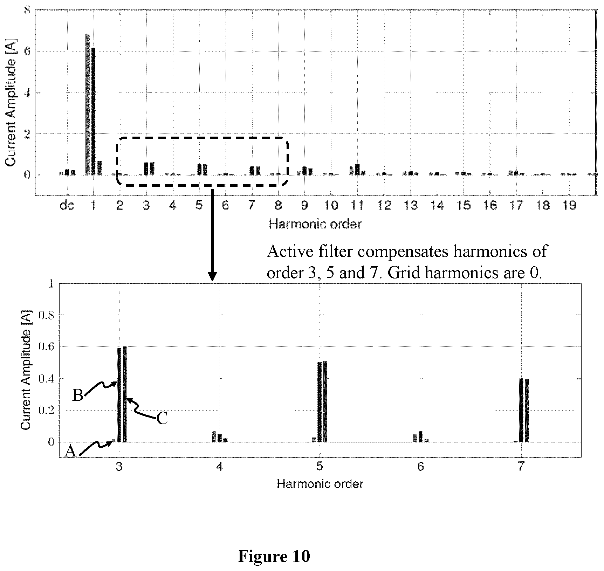

In order to provide a solid validation of the effectiveness of the selective harmonic compensation, the results from the harmonic spectrum are shown in **Figure 10.** Figure 10 shows an example of the harmonic spectrum for the results shown in Figure 9. These results have been obtained by post-processing experimental waveforms with a Fast Fourier Transform. It can be seen that the selective harmonic control is very effective in the target frequencies: 3rd, 5th and 7th harmonics. The graph on the bottom of Figure 10 zooms a region of the spectrum at which the selective harmonic control is effective. In the graphs of Figure 10 for each harmonic, the left bar "A" is the amplitude of the AC current of the AC grid; the middle bar "B" is the amplitude of the UPFR current; and the right bar "C" is the amplitude of the load current.

The control scheme of Figure 6 may achieve a good synchronization by tracking the phase-angle of the reference AC voltage for the PWM signal, wherein the reference AC voltage may be provided based on the computed AC input voltage of the rectifier 1. This overcomes the phenomena creating the distortion detailed above with respect to Figures 1, 2, 4 and 5. In particular, when the rectifier 1 is an UPFR, the AC input voltage of the rectifier 1 and the AC current of the AC grid input to the rectifier 1 are the two variables that, by physical behaviour of the UPFR, are always in-phase for the fundamental component, which may be 50 Hz (e.g. in Europe ) or 60 Hz.

The key benefits of the control scheme of Figure 6 are:
No sensors (AC voltage sensors) for sensing the AC voltage of the AC grid are needed, which increases the cost benefit and reliability of the control of the rectifier. The zero-crossing distortion may be minimized (in particular by the generation of the zero-crossing detection flag F1). This improves THDi, efficiency and reliability of the control of the rectifier. Ancillary services are possible for UPFR, for example the rectifier may be used in active filtering applications. The control scheme of Figure 6 may provide a robust solution, because the saturation block 623 may quickly detect faults and overloads and may trigger the back-up synchronization (cf. flag F2 generated by the saturation block 623 and controlling the selector S3).

The disclosure has been described in conjunction with various embodiments as examples as well as implementations. However, other variations can be understood and effected by those persons skilled in the art and practicing the claimed subject-matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. Variations and modifications are possible within the scope of the appended claims.

## Claims

1. A controller (6) for controlling a rectifier (1) for rectifying an AC voltage (V_{grid}) of an AC grid, wherein the rectifier (1) comprises at least one switch (1b) controllable by the controller (6) for short-circuiting an input (IN, IN') of the rectifier (1); wherein the controller (6) is configured to
• control switching of the at least one switch (1b) using a pulse-width modulation, PWM, signal
• compute, using an AC current (I_{grid}, 601a) of the AC grid and a DC voltage (Vₒᵤₜ, 601b) of an output (OUT, OUT') of the rectifier (1), an AC voltage (Vᵢₙ, 622) of the input of the rectifier (1), and
• provide, via a recursive computation based on the computed AC voltage (622), a reference AC voltage (625) for the PWM signal and stop the recursive computation of the reference AC voltage (625), in case a zero-crossing of the AC voltage (V_{grid}) of the AC grid is present and/or the computed AC voltage (622) is greater than the DC voltage (601b) of the output of the rectifier (1),
wherein the controller (6) is further configured to:
• compute, using a first control loop (604), a reference DC current (605) based on the DC voltage (601b) of the output of the rectifier (1) and based on a reference DC voltage (602) for the DC voltage (601b) of the output of the rectifier (1);
• provide a sinusoidal waveform (606), using a phase locked loop (609), based on the reference AC voltage (625), wherein the reference AC voltage (625) is input to the phase locked loop (609) in case the computed AC voltage (622) is smaller than or equal to the DC voltage (601b) of the output of the rectifier (1);
• compute a reference AC current (608) for the AC current (601a) of the AC grid based on the reference DC current (605) and the sinusoidal waveform (606); and
• compute, using a second control loop, the AC voltage (622) of the input of the rectifier (1) based on the AC current (601a) of the AC grid and the reference AC current (608); wherein the computing, using the second control loop, the AC voltage (622) of the input of the rectifier (1) based on the AC current (601a) of the AC grid and the reference AC current (608) comprises:
o compute an error (613) between the AC current (601a) of the AC grid and the reference AC current (608);
o compute a difference by subtracting an estimation (610) of the AC voltage (V_{grid}) of the AC grid from the reference AC voltage (625);
o compute an output (619) of a selective harmonic amplifier (618) by inputting:
- the difference to the selective harmonic amplifier (618), in case no zero-crossing of the AC voltage (V_{grid}) of the AC grid is present and/or the computed AC voltage (622) is smaller than or equal to the DC voltage (601b) of the output of the rectifier (1); and
- a value of zero Volts to the selective harmonic amplifier (618), in case the zero-crossing of the AC voltage (V_{grid}) of the AC grid is present and/or the computed AC voltage (622) is greater than the DC voltage (601b) of the output of the rectifier (1);
o compute a sum (616) of the error (613) and the output (619) of the selective harmonic amplifier (618), and amplify the sum (616); and
o compute the AC voltage (622) of the input of the rectifier (1) by adding an estimation (610) of the AC voltage (V_{grid}) of the AC grid to the amplified sum (620).

2. The controller (6) according to claim 1, wherein the controller (6) is configured to control, based on the reference AC voltage (625), a duty cycle of the PWM signal.

3. The controller (6) according to claim 1 or 2, wherein the controller (6) is configured to synchronize the AC current (I_{grid}, 601b) of the AC grid with the reference AC voltage (625) by tracking a phase-angle of the reference AC voltage (625).

4. The controller (6) according to any one of the previous claims, wherein the controller (6) is configured to determine the zero-crossing of the AC voltage (V_{grid}) of the AC grid based on the reference AC voltage (625).

5. The controller (6) according to any one of the previous claims, wherein the controller (6) is configured to determine whether the computed AC voltage (622) is smaller than or equal to the DC voltage (Vₒᵤₜ, 601b) of the output of the rectifier (1).

6. The controller (6) according to any one of the previous claims, wherein the controller (6) is configured to determine the zero-crossing of the AC voltage (V_{grid}) of the AC grid by inputting the reference AC voltage (625) to the phase locked loop (609), in case the computed AC voltage (622) is smaller than or equal to the DC voltage (601b) of the output of the rectifier (1).

7. A rectifier arrangement comprising
- a controller (6) according to any one of the previous claims and a rectifier (1) for rectifying an AC voltage (V_{grid}) of an AC grid; wherein
- the rectifier (1) comprises at least one switch (1b) controllable by the controller (6) for short-circuiting an input (IN, IN') of the rectifier (1); and
- the controller is configured to control switching of the at least one switch (1b) of the rectifier (1) using a pulse-width modulation, PWM, signal.

8. The rectifier arrangement according to claim 7, wherein
- the rectifier (1) comprises at least two diodes (1a) for rectifying the AC voltage (V_{grid}) of the AC grid, and
- the at least two diodes (1a) and the at least one switch (1b) are electrically connected such that the at least one switch (1b) is configured to prevent conduction of the at least two diodes (1a) by short-circuiting the input (IN, IN').

9. A method for controlling a rectifier (1) for rectifying an AC voltage (V_{grid}) of an AC grid, wherein the rectifier (1) comprises at least one switch (1b) controllable for short-circuiting an input (IN, IN') of the rectifier (1); wherein
the method comprises
• controlling switching of the at least one switch (1b) using a pulse-width modulation, PWM, signal
• computing, using an AC current (I_{grid}, 601a) of the AC grid and a DC voltage (Vₒᵤₜ, 601b) of an output (OUT, OUT') of the rectifier (1), an AC voltage (Vᵢₙ, 622) of the input (IN, IN') of the rectifier (1), and
• providing, via a recursive computation based on the computed AC voltage (622), a reference AC voltage (625) for the PWM signal, and stopping the recursive computation of the reference AC voltage (625), in case a zero-crossing of the AC voltage (V_{grid}) of the AC grid is present and/or the computed AC voltage (622) is greater than the DC voltage (601b) of the output of the rectifier (1),
wherein the method further comprises:
• computing, using a first control loop (604), a reference DC current (605) based on the DC voltage (601b) of the output of the rectifier (1) and based on a reference DC voltage (602) for the DC voltage (601b) of the output of the rectifier (1);
• providing a sinusoidal waveform (606), using a phase locked loop (609), based on the reference AC voltage (625), wherein the reference AC voltage (625) is input to the phase locked loop (609) in case the computed AC voltage (622) is smaller than or equal to the DC voltage (601b) of the output of the rectifier (1);
• computing a reference AC current (608) for the AC current (601a) of the AC grid based on the reference DC current (605) and the sinusoidal waveform (606); and
• computing, using a second control loop, the AC voltage (622) of the input of the rectifier (1) based on the AC current (601a) of the AC grid and the reference AC current (608);
wherein the computing, using the second control loop, the AC voltage (622) of the input of the rectifier (1) based on the AC current (601a) of the AC grid and the reference AC current (608) comprises:
o computing an error (613) between the AC current (601a) of the AC grid and the reference AC current (608);
o computing a difference by subtracting an estimation (610) of the AC voltage (V_{grid}) of the AC grid from the reference AC voltage (625);
o computing an output (619) of a selective harmonic amplifier (618) by inputting:
- the difference to the selective harmonic amplifier (618), in case no zero-crossing of the AC voltage (V_{grid}) of the AC grid is present and/or the computed AC voltage (622) is smaller than or equal to the DC voltage (601b) of the output of the rectifier (1); and
- a value of zero Volts to the selective harmonic amplifier (618), in case the zero-crossing of the AC voltage (V_{grid}) of the AC grid is present and/or the computed AC voltage (622) is greater than the DC voltage (601b) of the output of the rectifier (1);
o computing a sum (616) of the error (613) and the output (619) of the selective harmonic amplifier (618), and amplifying the sum (616); and
o computing the AC voltage (622) of the input of the rectifier (1) by adding an estimation (610) of the AC voltage (V_{grid}) of the AC grid to the amplified sum (620).

## Patentansprüche

1. Regler (6) zum Regeln eines Gleichrichters (1) zum Gleichrichten einer Wechselspannung (V_{grid}) eines Wechselstromnetzes, wobei der Gleichrichter (1) mindestens einen durch den Regler (6) regelbaren Schalter (1b) zum Kurzschließen eines Eingangs (IN, IN') des Gleichrichters (1) umfasst; wobei der Regler (6) konfiguriert ist zum
• Regeln des Schaltens des mindestens einen Schalters (1b) unter Verwendung eines Pulsweitenmodulations(PWM)-Signals
• Berechnen einer Wechselspannung (Vᵢₙ, 622) des Eingangs des Gleichrichters (1) unter Verwendung eines Wechselstroms (I_{grid}, 601a) des Wechselstromnetzes und einer Gleichspannung (Vₒᵤₜ, 601b) eines Ausgangs (OUT, OUT') des Gleichrichters (1), und
• Bereitstellen einer Referenzwechselspannung (625) für das PWM-Signal über eine rekursive Berechnung basierend auf der berechneten Wechselspannung (622) und Stoppen der rekursiven Berechnung der Referenzwechselspannung (625), falls ein Nulldurchgang der Wechselspannung (V_{grid}) des Wechselspannungsnetzes vorliegt und/oder die berechnete Wechselspannung (622) größer als die Gleichspannung (601b) des Ausgangs des Gleichrichters (1) ist,
wobei der Regler (6) ferner konfiguriert ist zum:
• Berechnen, unter Verwendung einer ersten Regelschleife (604), eines Referenzgleichstroms (605) basierend auf der Gleichspannung (601b) des Ausgangs des Gleichrichters (1) und basierend auf einer Referenzgleichspannung (602) für die Gleichspannung (601b) des Ausgangs des Gleichrichters (1);
• Bereitstellen einer sinusförmigen Wellenform (606) unter Verwendung eines Phasenregelkreises (609) basierend auf der Referenzwechselspannung (625), wobei die Referenzwechselspannung (625) in den Phasenregelkreis (609) eingegeben wird, falls die berechnete Wechselspannung (622) kleiner oder gleich der Gleichspannung (601b) des Ausgangs des Gleichrichters (1) ist;
• Berechnen eines Referenzwechselstroms (608) für den Wechselstrom (601a) des Wechselstromnetzes basierend auf dem Referenzgleichstrom (605) und der sinusförmigen Wellenform (606); und
• Berechnen der Wechselspannung (622) des Eingangs des Gleichrichters (1) unter Verwendung einer zweiten Regelschleife basierend auf dem Wechselstrom (601a) des Wechselstromnetzes und dem Referenzwechselstrom (608);
wobei das Berechnen der Wechselspannung (622) des Eingangs des Gleichrichters (1) unter Verwendung der zweiten Regelschleife basierend auf dem Wechselstrom (601a) des Wechselstromnetzes und dem Referenzwechselstrom (608) umfasst:
∘ Berechnen eines Fehlers (613) zwischen dem Wechselstrom (601a) des Wechselstromnetzes und dem Referenzwechselstrom (608);
∘ Berechnen einer Differenz durch Subtrahieren einer Schätzung (610) der Wechselspannung (V_{grid}) des Wechselstromnetzes von der Referenzwechselspannung (625);
∘ Berechnen einer Ausgabe (619) eines selektiven Oberwellenverstärkers (618) durch Eingeben von:
- der Differenz zu dem selektiven Oberwellenverstärker (618), falls kein Nulldurchgang der Wechselspannung (V_{grid}) des Wechselspannungsnetzes vorhanden ist und/oder die berechnete Wechselspannung (622) kleiner oder gleich der Gleichspannung (601b) des Ausgangs des Gleichrichters (1) ist; und
- einem Wert von null Volt in den selektiven Oberwellenverstärker (618), falls der Nulldurchgang der Wechselspannung (V_{grid}) des Wechselspannungsnetzes vorliegt und/oder die berechnete Wechselspannung (622) größer als die Gleichspannung (601b) des Ausgangs des Gleichrichters (1) ist;
∘ Berechnen einer Summe (616) aus dem Fehler (613) und dem Ausgang (619) des selektiven Oberwellenverstärkers (618), und Verstärken der Summe (616); und
∘ Berechnen der Wechselspannung (622) des Eingangs des Gleichrichters (1) durch Addieren einer Schätzung (610) der Wechselspannung (V_{grid}) des Wechselstromnetzes zu der verstärkten Summe (620).

2. Regler (6) nach Anspruch 1, wobei der Regler (6) konfiguriert ist, um basierend auf der Referenzwechselspannung (625) ein Tastverhältnis des PWM-Signals zu regeln.

3. Regler (6) nach Anspruch 1 oder 2, wobei der Regler (6) konfiguriert ist, um den Wechselstrom (I_{grid}, 601b) des Wechselstromnetzes mit der Referenzwechselspannung (625) durch Nachverfolgen eines Phasenwinkels der Referenzwechselspannung (625) zu synchronisieren.

4. Regler (6) nach einem der vorstehenden Ansprüche, wobei der Regler (6) konfiguriert ist, um den Nulldurchgang der Wechselspannung (V_{grid}) des Wechselstromnetzes basierend auf der Referenzwechselspannung (625) zu bestimmen.

5. Regler (6) nach einem der vorstehenden Ansprüche, wobei der Regler (6) konfiguriert ist, zu bestimmen, ob die berechnete Wechselspannung (622) kleiner oder gleich der Gleichspannung (Vₒᵤₜ, 601b) des Ausgangs des Gleichrichters (1) ist.

6. Regler (6) nach einem der vorstehenden Ansprüche, wobei der Regler (6) konfiguriert ist, den Nulldurchgang der Wechselspannung (V_{grid}) des Wechselstromnetzes durch Eingeben der Referenzwechselspannung (625) in den Phasenregelkreis (609) zu bestimmen, falls die berechnete Wechselspannung (622) kleiner als oder gleich der Gleichspannung (601b) des Ausgangs des Gleichrichters (1) ist.

7. Gleichrichteranordnung, umfassend
- einen Regler (6) nach einem der vorstehenden Ansprüche und einen Gleichrichter (1) zum Gleichrichten einer Wechselspannung (V_{grid}) eines Wechselstromnetzes; wobei
- der Gleichrichter (1) mindestens einen durch den Regler (6) regelbaren Schalter (1b) zum Kurzschließen eines Eingangs (IN, IN') des Gleichrichters (1) umfasst; und
- der Regler konfiguriert ist, das Schalten des mindestens einen Schalters (1b) des Gleichrichters (1) unter Verwendung eines Pulsweitenmodulations(PWM)-Signals zu regeln.

8. Gleichrichteranordnung nach Anspruch 7, wobei
- der Gleichrichter (1) mindestens zwei Dioden (1a) zum Gleichrichten der Wechselspannung (V_{grid}) des Wechselstromnetzes, und
- die mindestens zwei Dioden (1a) und der mindestens eine Schalter (1b) derart elektrisch verbunden sind, dass der mindestens eine Schalter (1b) dazu eingerichtet ist, ein Leiten der mindestens zwei Dioden (1a) durch Kurzschließen des Eingangs (IN, IN') zu verhindern.

9. Verfahren zum Regeln eines Gleichrichters (1) zum Gleichrichten einer Wechselspannung (V_{grid}) eines Wechselspannungsnetzes, wobei der Gleichrichter (1) mindestens einen Schalter (1b) umfasst, der zum Kurzschließen eines Eingangs (IN, IN') des Gleichrichters (1) regelbar ist; wobei
das Verfahren umfasst
• Regeln des Schaltens des mindestens einen Schalters (1b) unter Verwendung eines Pulsweitenmodulations(PWM)- Signals
• Berechnen, unter Verwendung eines Wechselstroms (I_{grid}, 601a) des Wechselstromnetzes und einer Gleichspannung (Vₒᵤₜ, 601b) eines Ausgangs (OUT, OUT') des Gleichrichters (1), einer Wechselspannung (Vᵢₙ, 622) des Eingangs (IN, IN') des Gleichrichters (1), und
• Bereitstellen einer Referenzwechselspannung (625) für das PWM-Signal über eine rekursive Berechnung basierend auf der berechneten Wechselspannung (622) und Stoppen der rekursiven Berechnung der Referenzwechselspannung (625), falls ein Nulldurchgang der Wechselspannung (V_{grid}) des Wechselspannungsnetzes vorliegt und/oder die berechnete Wechselspannung (622) größer als die Gleichspannung (601b) des Ausgangs des Gleichrichters (1) ist,
wobei das Verfahren ferner umfasst:
• Berechnen, unter Verwendung einer ersten Regelschleife (604), eines Referenzgleichstroms (605) basierend auf der Gleichspannung (601b) des Ausgangs des Gleichrichters (1) und basierend auf einer Referenzgleichspannung (602) für die Gleichspannung (601b) des Ausgangs des Gleichrichters (1);
• Bereitstellen einer sinusförmigen Wellenform (606) unter Verwendung eines Phasenregelkreises (609) basierend auf der Referenzwechselspannung (625), wobei die Referenzwechselspannung (625) in den Phasenregelkreis (609) eingegeben wird, falls die berechnete Wechselspannung (622) kleiner oder gleich der Gleichspannung (601b) des Ausgangs des Gleichrichters (1) ist;
• Berechnen eines Referenzwechselstroms (608) für den Wechselstrom (601a) des Wechselstromnetzes basierend auf dem Referenzgleichstrom (605) und der sinusförmigen Wellenform (606); und
• Berechnen der Wechselspannung (622) des Eingangs des Gleichrichters (1) unter Verwendung einer zweiten Regelschleife basierend auf dem Wechselstrom (601a) des Wechselstromnetzes und dem Referenzwechselstrom (608);
wobei das Berechnen der Wechselspannung (622) des Eingangs des Gleichrichters (1) unter Verwendung der zweiten Regelschleife basierend auf dem Wechselstrom (601a) des Wechselstromnetzes und dem Referenzwechselstrom (608) umfasst:
∘ Berechnen eines Fehlers (613) zwischen dem Wechselstrom (601a) des Wechselstromnetzes und dem Referenzwechselstrom (608);
∘ Berechnen einer Differenz durch Subtrahieren einer Schätzung (610) der Wechselspannung (V_{grid}) des Wechselstromnetzes von der Referenzwechselspannung (625);
∘ Berechnen einer Ausgabe (619) eines selektiven Oberwellenverstärkers (618) durch Eingeben von:
- der Differenz zu dem selektiven Oberwellenverstärker (618), falls kein Nulldurchgang der Wechselspannung (V_{grid}) des Wechselspannungsnetzes vorhanden ist und/oder die berechnete Wechselspannung (622) kleiner oder gleich der Gleichspannung (601b) des Ausgangs des Gleichrichters (1) ist; und
- einem Wert von null Volt in den selektiven Oberwellenverstärker (618), falls der Nulldurchgang der Wechselspannung (V_{grid}) des Wechselspannungsnetzes vorliegt und/oder die berechnete Wechselspannung (622) größer als die Gleichspannung (601b) des Ausgangs des Gleichrichters (1) ist;
∘ Berechnen einer Summe (616) aus dem Fehler (613) und dem Ausgang (619) des selektiven Oberwellenverstärkers (618), und Verstärken der Summe (616); und
∘ Berechnen der Wechselspannung (622) des Eingangs des Gleichrichters (1) durch Addieren einer Schätzung (610) der Wechselspannung (V_{grid}) des Wechselstromnetzes zu der verstärkten Summe (620).

## Revendications

1. Dispositif de commande (6) permettant de commander un redresseur (1) afin de redresser une tension alternative (V_{grid}) d'un réseau alternatif, dans lequel le redresseur (1) comprend au moins un commutateur (1b) pouvant être commandé par le dispositif de commande (6) pour court-circuiter une entrée (IN, IN') du redresseur (1) ; dans lequel le dispositif de commande (6) est configuré pour
• commander la commutation de l'au moins un commutateur (1b) à l'aide d'un signal de modulation de largeur d'impulsion, PWM
• calculer, à l'aide d'un courant alternatif (I_{grid}, 601a) du réseau alternatif et d'une tension continue (Vₒᵤₜ, 601b) d'une sortie (OUT, OUT') du redresseur (1), une tension alternative (Vᵢₙ, 622) de l'entrée du redresseur (1), et
• fournir, par l'intermédiaire d'un calcul récursif basé sur la tension alternative calculée (622), une tension alternative de référence (625) pour le signal PWM et arrêter le calcul récursif de la tension alternative de référence (625), dans le cas où un passage par zéro de la tension alternative (V_{grid}) du réseau alternatif est présent et/ou la tension alternative calculée (622) est supérieure à la tension continue (601b) de la sortie du redresseur (1), dans lequel le dispositif de commande (6) est en outre configuré pour :
• calculer, à l'aide d'une première boucle de commande (604), un courant continu de référence (605) sur la base de la tension continue (601b) de la sortie du redresseur (1) et sur la base d'une tension continue de référence (602) pour la tension continue (601b) de la sortie du redresseur (1) ;
• fournir une forme d'onde sinusoïdale (606), à l'aide d'une boucle à verrouillage de phase (609), sur la base de la tension alternative de référence (625), dans lequel la tension alternative de référence (625) est fournie en entrée à la boucle à verrouillage de phase (609) dans le cas où la tension alternative calculée (622) est inférieure ou égale à la tension continue (601b) de la sortie du redresseur (1) ;
• calculer un courant alternatif de référence (608) pour le courant alternatif (601a) du réseau alternatif sur la base du courant continu de référence (605) et de la forme d'onde sinusoïdale (606) ; et
• calculer, à l'aide d'une seconde boucle de commande, la tension alternative (622) de l'entrée du redresseur (1) sur la base du courant alternatif (601a) du réseau alternatif et du courant alternatif de référence (608) ;
dans lequel le calcul, à l'aide de la seconde boucle de commande, de la tension alternative (622) de l'entrée du redresseur (1) sur la base du courant alternatif (601a) du réseau alternatif et du courant alternatif de référence (608) comprend :
∘ le calcul d'une erreur (613) entre le courant alternatif (601a) du réseau alternatif et le courant alternatif de référence (608) ;
∘ le calcul d'une différence en soustrayant une estimation (610) de la tension alternative (V_{grid}) du réseau alternatif de la tension alternative de référence (625) ;
∘ le calcul d'une sortie (619) d'un amplificateur d'harmoniques sélectif (618) en fournissant en entrée :
- la différence à l'amplificateur d'harmoniques sélectif (618), dans le cas où aucun passage par zéro de la tension alternative (V_{grid}) du réseau alternatif n'est présent et/ou la tension alternative (622) calculée est inférieure ou égale à la tension continue (601b) de la sortie du redresseur (1) ; et
- une valeur de zéro Volt à l'amplificateur d'harmoniques sélectif (618), dans le cas où le passage par zéro de la tension alternative (V_{grid}) du réseau alternatif est présent et/ou la tension alternative calculée (622) est supérieure à la tension continue (601b) de la sortie du redresseur (1) ;
∘ le calcul d'une somme (616) de l'erreur (613) et de la sortie (619) de l'amplificateur d'harmonique sélectif (618), et l'amplification de la somme (616) ; et
∘ le calcul de la tension alternative (622) de l'entrée du redresseur (1) en ajoutant une estimation (610) de la tension alternative (V_{grid}) du réseau alternatif à la somme amplifiée (620).

2. Dispositif de commande (6) selon la revendication 1, dans lequel le dispositif de commande (6) est configuré pour commander, sur la base de la tension alternative de référence (625), un cycle de service du signal PWM.

3. Dispositif de commande (6) selon la revendication 1 ou 2, dans lequel le dispositif de commande (6) est configuré pour synchroniser le courant alternatif (I_{grid}, 601b) du réseau alternatif avec la tension alternative de référence (625) par le suivi d'un angle de phase de la tension alternative de référence (625).

4. Dispositif de commande (6) selon l'une quelconque des revendications précédentes, dans lequel le dispositif de commande (6) est configuré pour déterminer le passage par zéro de la tension alternative (V_{grid}) du réseau alternatif sur la base de la tension alternative de référence (625).

5. Dispositif de commande (6) selon l'une quelconque des revendications précédentes, dans lequel le dispositif de commande (6) est configuré pour déterminer si la tension alternative (622) calculée est inférieure ou égale à la tension continue (Vₒᵤₜ, 601b) de la sortie du redresseur (1).

6. Dispositif de commande (6) selon l'une quelconque des revendications précédentes, dans lequel le dispositif de commande (6) est configuré pour déterminer le passage par zéro de la tension alternative (V_{grid}) du réseau alternatif en fournissant en entrée la tension alternative de référence (625) à la boucle à verrouillage de phase (609), dans le cas où la tension alternative (622) calculée est inférieure ou égale à la tension continue (601b) de la sortie du redresseur (1).

7. Agencement de redresseur comprenant
- un dispositif de commande (6) selon l'une quelconque des revendications précédentes et un redresseur (1) pour redresser une tension alternative (V_{grid}) d'un réseau alternatif ; dans lequel
- le redresseur (1) comprend au moins un commutateur (1b) pouvant être commandé par le dispositif de commande (6) pour court-circuiter une entrée (IN, IN') du redresseur (1) ; et
- le dispositif de commande est configuré pour commander la commutation de l'au moins un commutateur (1b) du redresseur (1) à l'aide d'un signal de modulation de largeur d'impulsion, PWM.

8. Agencement de redresseur selon la revendication 7, dans lequel
- le redresseur (1) comprend au moins deux diodes (1a) pour redresser la tension alternative (V_{grid}) du réseau alternatif, et
- les au moins deux diodes (1a) et l'au moins un commutateur (1b) sont connectés électriquement de telle sorte que l'au moins un commutateur (1b) est configuré pour empêcher la conduction des au moins deux diodes (1a) en court-circuitant l'entrée (IN, IN').

9. Procédé de commande d'un redresseur (1) pour redresser une tension alternative (V_{grid}) d'un réseau alternatif, dans lequel le redresseur (1) comprend au moins un commutateur (1b) pouvant être commandé pour court-circuiter une entrée (IN, IN') du redresseur (1) ; dans lequel le procédé comprend
• la commande de la commutation de l'au moins un commutateur (1b) à l'aide d'un signal de modulation de largeur d'impulsion, PWM
• le calcul, à l'aide d'un courant alternatif (I_{grid}, 601a) du réseau alternatif et d'une tension continue (Vₒᵤₜ, 601b) d'une sortie (OUT, OUT') du redresseur (1), d'une tension alternative (Vᵢₙ, 622) de l'entrée (IN, IN') du redresseur (1), et
• la fourniture, par l'intermédiaire d'un calcul récursif basé sur la tension alternative calculée (622), d'une tension alternative de référence (625) pour le signal PWM, et l'arrêt du calcul récursif de la tension alternative de référence (625), dans le cas où un passage par zéro de la tension alternative (V_{grid}) du réseau alternatif est présent et/ou la tension alternative (622) calculée est supérieure à la tension continue (601b) de la sortie du redresseur (1),
dans lequel le procédé comprend en outre :
• le calcul, à l'aide d'une première boucle de commande (604), d'un courant continu de référence (605) sur la base de la tension continue (601b) de la sortie du redresseur (1) et sur la base d'une tension continue de référence (602) pour la tension continue (601b) de la sortie du redresseur (1) ;
• la fourniture d'une forme d'onde sinusoïdale (606), à l'aide d'une boucle à verrouillage de phase (609), sur la base de la tension alternative de référence (625), dans lequel la tension alternative de référence (625) est fournie en entrée dans la boucle à verrouillage de phase (609) dans le cas où la tension alternative calculée (622) est inférieure ou égale à la tension continue (601b) de la sortie du redresseur (1) ;
• le calcul d'un courant alternatif de référence (608) pour le courant alternatif (601a) du réseau alternatif sur la base du courant continu de référence (605) et de la forme d'onde sinusoïdale (606) ; et
• le calcul, à l'aide d'une seconde boucle de commande, de la tension alternative (622) de l'entrée du redresseur (1) sur la base du courant alternatif (601a) du réseau alternatif et du courant alternatif de référence (608) ;
dans lequel le calcul, à l'aide de la seconde boucle de commande, de la tension alternative (622) de l'entrée du redresseur (1) sur la base du courant alternatif (601a) du réseau alternatif et du courant alternatif de référence (608) comprend :
∘ le calcul d'une erreur (613) entre le courant alternatif (601a) du réseau alternatif et le courant alternatif de référence (608) ;
∘ le calcul d'une différence en soustrayant une estimation (610) de la tension alternative (V_{grid}) du réseau alternatif de la tension alternative de référence (625) ;
∘ le calcul d'une sortie (619) d'un amplificateur d'harmoniques sélectif (618) en fournissant en entrée :
- la différence à l'amplificateur d'harmoniques sélectif (618), dans le cas où aucun passage par zéro de la tension alternative (V_{grid}) du réseau alternatif n'est présent et/ou la tension alternative calculée (622) est inférieure ou égale à la tension continue (601b) de la sortie du redresseur (1) ; et
- une valeur de zéro Volt à l'amplificateur d'harmoniques sélectif (618), dans le cas où le passage par zéro de la tension alternative (V_{grid}) du réseau alternatif est présent et/ou la tension alternative (622) calculée est supérieure à la tension continue (601b) de la sortie du redresseur (1) ;
∘ le calcul d'une somme (616) de l'erreur (613) et de la sortie (619) de l'amplificateur d'harmoniques sélectif (618), et l'amplification de la somme (616) ; et
∘ le calcul de la tension alternative (622) de l'entrée du redresseur (1) en ajoutant une estimation (610) de la tension alternative (V_{grid}) du réseau alternatif à la somme amplifiée (620).
